# EUROPEAN PATENT APPLICATION

(11) **EP 4 376 469 A1**
(43) Date of publication of application: **29.05.2024**
(21) Application number: 22845349.4
(22) Date of filing: 20.07.2022
(51) Int. Cl.: H04W 24/02

(54) **SENSING SIGNAL MEASUREMENT METHOD AND APPARATUS, NETWORK DEVICE, AND TERMINAL**

(30) Priority: 23.07.2021 CN 202110838248
(71) Applicant: Vivo Mobile Communication Co., Ltd., Dongguan, Guangdong 523863 (CN)
(72) Inventor: YAO, Jian, Dongguan, Guangdong 523863 (CN); JIANG, Dajie, Dongguan, Guangdong 523863 (CN); PAN, Xiang, Dongguan, Guangdong 523863 (CN); SI, Ye, Dongguan, Guangdong 523863 (CN); QIN, Fei, Dongguan, Guangdong 523863 (CN); YUAN, Yannan, Dongguan, Guangdong 523863 (CN)
(74) Representative: Conti, Marco
(86) International application number: PCT/CN2022/106740
(87) International publication number: WO 2023/001184

(57) **Abstract**

This application discloses a method and an apparatus for measuring a sensing signal, a network device, and a terminal, and pertains to the field of communication technologies. The method for measuring a sensing signal in embodiments of this application includes: obtaining, by a first network device, a sensing signal sent by a terminal; and obtaining, by the first network device based on the sensing signal, a measurement result corresponding to a first measurement amount, where the first measurement amount is a measurement amount related to the sensing signal.

## Description

### CROSS-REFERENCE TO RELATED APPLICATIONS

This application claims priority to Chinese Patent Application No. 202110838248.5, filed on July 23, 2021 in China, which is incorporated herein by reference in its entirety.

### TECHNICAL FIELD

This application pertains to the field of wireless communication technologies, and specifically relates to a method and an apparatus for measuring a sensing signal, a network device, and a terminal.

### BACKGROUND

In addition to a communication capability, a future mobile communications system will have a sensing capability. The sensing capability is that one or more devices with the sensing capability can sense information such as a location, a distance, and a speed of a target object by sending and receiving a wireless signal, or detect, track, identify, and image a target object, an event, an environment, and the like.

Integration of communication and a radar is a typical communication sensing fusion application. Sensing based on a single-station mode may be performed, that is, a same address is used during receiving and transmission: A base station transmits a sensing signal, and then, the base station receives an echo signal and analyzes the echo signal to extract a sensing parameter. Alternatively, sensing based on a dual-station/multi-station mode may be performed, that is, different addresses are used during receiving and transmission: A base station transmits a sensing signal, and another receive end receives and analyzes the sensing signal, and extracts a sensing parameter. In the prior art, there is no related solution to a procedure in which a terminal sends a sensing signal to perform wireless sensing.

### SUMMARY

Embodiments of this application provide a method and an apparatus for measuring a sensing signal, a network device, and a terminal, so that a terminal can send a sensing signal to perform wireless sensing.

According to a first aspect, a method for measuring a sensing signal is provided, and the method includes:
obtaining, by a first network device, a sensing signal sent by a terminal; and
obtaining, by the first network device based on the sensing signal, a measurement result corresponding to a first measurement amount; where
the first measurement amount is a measurement amount related to the sensing signal.

According to a second aspect, a method for measuring a sensing signal is provided, and the method includes:
sending, by a terminal, a sensing signal to a first network device.

According to a third aspect, a method for measuring a sensing signal is provided, and the method includes:
sending, by a second network device, second indication information to a first network device and/or a terminal, where the second indication information is used to instruct the terminal to send a sensing signal, and/or the second indication information is used to instruct the first network device to receive a sensing signal and obtain, based on the sensing signal, a measurement result corresponding to a first measurement amount; where
the first measurement amount is a measurement amount related to the sensing signal.

According to a fourth aspect, an apparatus for measuring a sensing signal is provided, including:
a first obtaining module, configured to obtain a sensing signal sent by a terminal; and
a second obtaining module, configured to obtain, based on the sensing signal, a measurement result corresponding to a first measurement amount; where
the first measurement amount is a measurement amount related to the sensing signal.

According to a fifth aspect, an apparatus for measuring a sensing signal is provided, including:
a first sending module, configured to send a sensing signal to a first network device.

According to a sixth aspect, an apparatus for measuring a sensing signal is provided, including:
a second sending module, configured to send second indication information to a first network device and/or a terminal, where the second indication information is used to instruct the terminal to send a sensing signal, and/or the second indication information is used to instruct the first network device to receive a sensing signal and obtain, based on the sensing signal, a measurement result corresponding to a first measurement amount; where
the first measurement amount is a measurement amount related to the sensing signal.

According to a seventh aspect, a network device is provided. The network device is a first network device and includes a processor, a memory, and a program or an instruction that is stored in the memory and that can run on the processor, and when the program or the instruction is executed by the processor, steps of the method according to the first aspect are implemented.

According to an eighth aspect, a network device is provided. The network device is a first network device, and includes a processor and a communications interface. The communications interface is configured to obtain a sensing signal sent by a terminal. The processor is configured to obtain, based on the sensing signal, a measurement result corresponding to a first measurement amount, where the first measurement amount is a measurement amount related to the sensing signal.

According to a ninth aspect, a terminal is provided. The terminal includes a processor, a memory, and a program or an instruction that is stored in the memory and that can run on the processor, where when the program or the instruction is executed by the processor, the steps of the method in the second aspect are implemented.

According to a tenth aspect, a terminal is provided, including a processor and a communications interface. The processor is configured to send a sensing signal to a first network device through the communications interface.

According to an eleventh aspect, a network device is provided. The network device is a second network device and includes a processor, a memory, and a program or an instruction that is stored in the memory and that can run on the processor, and when the program or the instruction is executed by the processor, steps of the method according to the third aspect are implemented.

According to a twelfth aspect, a network device is provided. The network device is a second network device, and includes a processor and a communications interface, and the processor is configured to send second indication information to a first network device and/or a terminal through the communications interface, where the second indication information is used to instruct the terminal to send a sensing signal, and/or the second indication information is used to instruct the first network device to receive a sensing signal and obtain, based on the sensing signal, a measurement result corresponding to a first measurement amount; where
the first measurement amount is a measurement amount related to the sensing signal.

According to a thirteenth aspect, a readable storage medium is provided. The readable storage medium stores a program or an instruction. When the program or the instruction is executed by a processor, steps of the method according to the first aspect are implemented, or steps of the method according to the second aspect are implemented, or steps of the method according to the third aspect are implemented.

According to a fourteenth aspect, a chip is provided. The chip includes a processor and a communications interface. The communications interface is coupled to the processor. The processor is configured to run a program or an instruction, to implement steps of the method according to the first aspect, or steps of the method according to the second aspect, or steps of the method according to the third aspect.

According to a fifteenth aspect, a computer program/program product is provided. The computer program/program product is stored in a non-volatile storage medium, and the program/program product is executed by at least one processor to implement steps of the method for measuring a sensing signal according to the first aspect, or steps of the method for measuring a sensing signal according to the second aspect, or steps of the method for measuring a sensing signal according to the third aspect.

According to a sixteenth aspect, a communications device is provided, configured to perform steps of the method for measuring a sensing signal according to the first aspect, or steps of the method for measuring a sensing signal according to the second aspect, or steps of the method for measuring a sensing signal according to the third aspect.

In the embodiments of this application, a terminal sends a sensing signal to the first network device, and the first network device receives the sensing signal, and may measure the sensing signal based on a first measurement amount related to the sensing signal, to obtain a measurement result, so that a wireless sensing procedure in which the terminal sends a sensing signal and a base station receives the sensing signal is implemented.

### BRIEF DESCRIPTION OF DRAWINGS

FIG. 1 is a block diagram of a wireless communication system to which embodiments of this application can be applied;
FIG. 2 is a first schematic flowchart of a method for measuring a sensing signal according to an embodiment of this application;
FIG. 3 is a schematic diagram of information exchange between a base station, a terminal, and a core network according to an embodiment of this application;
FIG. 4 is a second schematic flowchart of a method for measuring a sensing signal according to an embodiment of this application;
FIG. 5 is a third schematic flowchart of a method for measuring a sensing signal according to an embodiment of this application;
FIG. 6 is a first schematic diagram of a structure of an apparatus for measuring a sensing signal according to an embodiment of this application;
FIG. 7 is a second schematic diagram of a structure of an apparatus for measuring a sensing signal according to an embodiment of this application;
FIG. 8 is a third schematic diagram of a structure of an apparatus for measuring a sensing signal according to an embodiment of this application;
FIG. 9 is a schematic diagram of a structure of a communications device according to an embodiment of this application;
FIG. 10 is a first schematic diagram of a network device according to an embodiment of this application;
FIG. 11 is a schematic diagram of a terminal according to an embodiment of this application; and
FIG. 12 is a second schematic diagram of a network device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and a quantity of objects is not limited. For example, there may be one or more first objects. In addition, in the specification and the claims, "and/or" represents at least one of connected objects, and the character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. A new radio (New Radio, NR) system is described below for an illustration purpose, and the term NR is used in most of the descriptions, although these technologies can also be used in an application other than an NR system application, for example, a 6^{th} generation (6^{th} Generation, 6G) communications system.

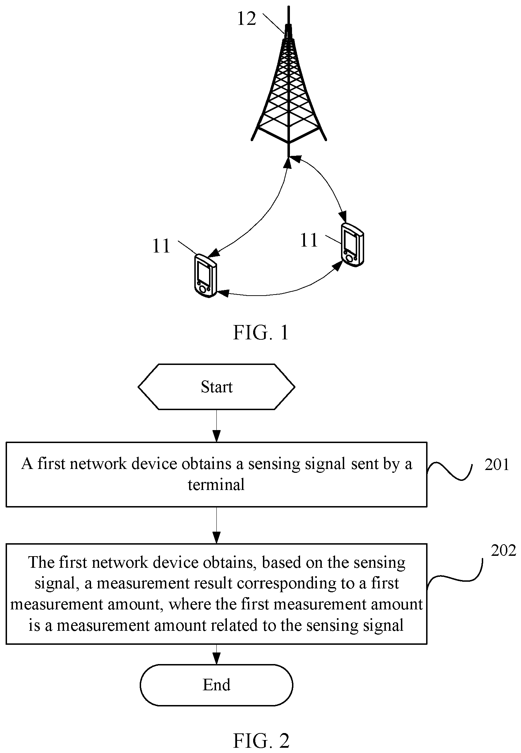

FIG. 1 is a block diagram of a wireless communications system to which embodiments of this application can be applied. The wireless communications system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicle user equipment (VUE), or pedestrian user equipment (PUE). The wearable device includes a smart watch, a bracelet, a headset, glasses, and the like. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. Provided that a same technical effect is achieved, the base station is not limited to a specified technical term. It should be noted that, in the embodiments of this application, only a base station in an NR system is used as an example, but a specific type of the base station is not limited.

With reference to the accompanying drawings, the following describes in detail a method and an apparatus for measuring a sensing signal, a network device, and a terminal in the embodiments of this application based on some embodiments and application scenarios thereof.

As shown in FIG. 2, this application provides a method for measuring a sensing signal, applied to a first network device and including:
Step 201: The first network device obtains a sensing signal sent by a terminal.
Step 202: The first network device obtains, based on the sensing signal, a measurement result corresponding to a first measurement amount, where the first measurement amount is a measurement amount related to the sensing signal.

In this embodiment, the terminal sends the sensing signal to the first network device, and the first network device may be a base station. The first network device receives the sensing signal, and may measure the sensing signal based on the first measurement amount related to the sensing signal, to obtain the measurement result, so that a wireless sensing procedure in which the terminal sends a sensing signal and the base station receives the sensing signal is implemented.

Optionally, the receiving the sensing signal sent by the terminal includes: determining configuration information of the sensing signal; and receiving the sensing signal based on the configuration information.

When sending the sensing signal, the terminal sends the sensing signal based on the configuration information of the sensing signal, the first network device needs to determine the configuration information of the sensing signal, and receive the sensing signal based on the configuration information. Specifically, the configuration information of the sensing signal may include at least one of the following:
(a) a waveform of the sensing signal, for example, orthogonal frequency division multiplex (Orthogonal frequency division multiplex, OFDM), single-carrier frequency-division multiple access (Single-carrier Frequency-Division Multiple Access, SC-FDMA), orthogonal time frequency & space (Orthogonal Time Frequency & Space, OTFS), frequency modulated continuous wave (Frequency Modulated Continuous Wave, FMCW), and a pulse signal;
(b) a subcarrier spacing of the sensing signal, for example, a subcarrier spacing 30 KHz of an OFDM system;
(c) a guard interval of the sensing signal, where the guard interval is a time interval from a moment at which sending of the sensing signal ends to a moment at which the latest echo signal of the signal is received, and the guard interval is proportional to a maximum sensing distance, for example, the guard interval may be calculated by using 2dmax/c, and dmax represents the maximum sensing distance (belonging to a sensing requirement), and for example, for a self-transmitted and self-received sensing signal, dmax represents a maximum distance from a transmitting and receiving point of the sensing signal to a signal transmission point; in some cases, an OFDM signal cyclic prefix (Cyclic prefix, CP) may serve as a minimum guard interval; and c indicates a speed of light;
(d) bandwidth of the sensing signal, where the bandwidth is inversely proportional to distance resolution, and can be obtained by c/(2*delta_d), where delta d represents the distance resolution (belonging to a sensing requirement);
(e) burst duration of the sensing signal, where the burst duration is inversely proportional to speed resolution (belonging to a sensing requirement), and this parameter is a time span of the sensing signal, and is mainly to calculate Doppler frequency shift, and this parameter may be calculated by using c/(2*delta _v*fc), where delta_v represents the speed resolution, and fc indicates a signal carrier frequency or a center frequency of the signal;
(f) a time domain interval of the sensing signal, where the time domain interval may be calculated by using c/(2*fc*v_range), where v_range (belonging to a sensing requirement) is a maximum speed minus a minimum speed, and the time interval is a time interval between two adjacent sensing signals;
(g) transmit signal power of the sensing signal, where for example, a value is obtained every 2 dBm from -20 dBm to 23 dBm;
(h) a signal format of the sensing signal, where the signal format is information such as a sounding reference signal (Sounding Reference Signal, SRS), a demodulation reference signal (Demodulation Reference Signal, DMRS), a positioning reference signal (Positioning Reference Signal, PRS), or another predefined signal and a related sequence format;
(i) a signal direction of the sensing signal, for example, a direction of the sensing signal or beam information;
(j) a time resource of the sensing signal, for example, a timeslot index or a symbol index of a timeslot in which the sensing signal is located, where there are two types of time resources: One is a one-time time resource, for example, one omnidirectional first signal is sent on one symbol; and the other is a non-one-time time resource, such as a plurality of groups of periodic time resources or discontinuous time resources (which may include start time and end time), where sensing signals in a same direction are sent on each group of periodic time resources, and beam directions of different groups of periodic time resources are different;
(k) a frequency resource of the sensing signal, where the frequency resource may include a center frequency, bandwidth, a resource block (Resource Block, RB), a subcarrier, and the like of the sensing signal;
(l) a quasi-colocation (Quasi-Colocation, QCL) relationship of the sensing signal, for example, the sensing signal includes a plurality of resources, each resource is in QCL with one synchronization signal block (Synchronization Signal mid PBCH block, SSB), and the QCL includes Type A, B, C, or D.

In an optional embodiment, the determining the configuration information of the sensing signal may include:
receiving, by the first network device, second indication information sent by a second network device and/or third indication information sent by the terminal, and determining the configuration information of the sensing signal based on the second indication information and/or the third indication information; where
the second indication information includes at least one of a sensing requirement, second configuration information of the sensing signal, capability information of the second network device, and recommended configuration information of the second network device; and
the third indication information includes at least one of a sensing requirement, third configuration information of the sensing signal, capability information of the terminal, and recommended configuration information of the terminal.

The second network device may be a core network, and the second network device sends the second indication information to the first network device and/or the terminal. The second indication information may be used to instruct the first network device to receive the sensing signal and obtain, based on the sensing signal, the measurement result corresponding to the first measurement amount; and/or the second indication information may be used to instruct the terminal to send the sensing signal. The first network device and/or the second network device may determine the configuration information of the sensing signal based on the second indication information.

The terminal may send the third indication information to the first network device and/or the second network device, so that the first network device and/or the second network device determine/determines the configuration information of the sensing signal based on the third indication information.

The configuration information of the sensing signal may be determined by at least one of the first network device, the second network device, and the terminal. After determining the configuration information, a determining party of the configuration information sends the configuration information to a remaining party. The remaining party may send capability information and/or recommended configuration information to the determining party, and the determining party comprehensively determines the configuration information. In this embodiment, the first network device may determine the configuration information of the sensing signal based on the second indication information of the second network device and/or the third indication information of the terminal and with reference to configuration information determined by the first network device.

Specifically, the configuration information of the sensing signal may include at least one of the following:
first configuration information, where the first configuration information is configuration information of the sensing signal that is determined by the first network device;
second configuration information, where the second configuration information is configuration information of the sensing signal that is determined by the second network device; and
third configuration information, where the third configuration information is configuration information of the sensing signal that is determined by the terminal.

In this embodiment, the configuration information of the sensing signal may be determined by at least one of the first network device, the second network device, and the terminal. For example, the configuration information of the sensing signal includes the first configuration information, that is, the configuration information of the sensing signal is determined by the first network device; the configuration information of the sensing signal includes the first configuration information and the second configuration information, and in this case, the configuration information of the sensing signal is jointly determined by the first network device and the second network device; or the configuration information of the sensing signal includes the first configuration information, the second configuration information, and the third configuration information, and in this case, the configuration information of the sensing signal is jointly determined by the first network device, the second network device, and the terminal.

Specifically, the first network device may determine the first configuration information by using at least one of the following:
a sensing requirement;
capability information of the second network device;
recommended configuration information of the second network device;
capability information of the terminal; and
recommended configuration information of the terminal.

The first network device may determine the first configuration information based on the second indication information and/or the third indication information and/or a sensing requirement of the first network device, for example, determine a bandwidth size of the sensing signal based on a sensing resolution requirement. Optionally, the first network device may further comprehensively determine the first configuration information based on capability information, recommended configuration information, and the like that are sent by the second network device and/or the terminal. After determining the configuration information of the sensing signal, the first network device may send the configuration information of the sensing signal to the second network device and/or the terminal.

Specifically, the sensing requirement may include a sensing result and a sensing indicator. The sensing result may include at least one of the following:
feature information of a target object: existence, a distance, a location, a speed, an acceleration, a material, a shape, a category, a radar cross section RCS, a polarization scattering feature, and the like of the target object;
related information of a target event: falling-down detection, intrusion detection, quantity counting, indoor positioning, gesture recognition, lip language recognition, gait recognition, expression recognition, respiration monitoring, heart rate monitoring, and the like; and
related information of a target environment: humidity, brightness, temperature, atmospheric pressure, air quality, weather conditions, terrain, construction/vegetation distribution, population counting, population density, vehicle density, and the like.

The sensing indicator includes at least one of the following:
sensing precision (including distance resolution, imaging resolution, moving speed resolution, or angle resolution);
a sensing error (including a distance error, an imaging error, or a moving speed error);
a sensing range;
a sensing delay;
a detection probability; and
a false alarm probability.

Optionally, when the configuration information of the sensing signal is determined by the terminal, the terminal receives the first indication information sent by the first network device and/or the second indication information sent by the second network device, and determines the configuration information of the sensing signal based on the first indication information and/or the second indication information, where the first indication information includes at least one of a sensing requirement, the first configuration information of the sensing signal, capability information of the first network device, and recommended configuration information of the first network device, and the second indication information includes at least one of a sensing requirement, the second configuration information of the sensing signal, capability information of the second network device, and recommended configuration information of the second network device. The terminal determines the second configuration information by using at least one of the following: a sensing requirement, capability information of the first network device, recommended configuration information of the first network device, capability information of the second network device, and recommended configuration information of the second network device. After determining the configuration information of the sensing signal, the terminal sends the configuration information to the first network device and/or the second network device.

Optionally, when the configuration information of the sensing signal is determined by the second network device, the second network device receives target indication information, where the target indication information includes at least one of the first indication information sent by the first network device, the third indication information sent by the terminal, and fourth indication information sent by an application server; and determines the configuration information of the sensing signal based on the target indication information. A sensing service may be initiated by any one of the first network device, the second network device, the terminal, and the application server. When the application server initiates the sensing service, the sensing requirement is sent to the second network device, so that the second network device sends the sensing requirement to the first network device and/or the terminal. The second network device may determine the second configuration information by using at least one of the following: a sensing requirement, capability information of the terminal, recommended configuration information of the terminal, recommended configuration information of the first network device, and capability information of the first network device. After determining the configuration information of the sensing signal, the second network device sends the configuration information to the first network device and/or the terminal.

Methods used by the terminal and the second network device to determine the configuration information of the sensing signal are similar to the method used by the first network device to determine the configuration information of the sensing signal, and details are not described herein again.

In an optional embodiment, before the obtaining a sensing signal sent by a terminal, the method further includes:
sending, by the first network device, first indication information to the second network device and/or the terminal, where the first indication information includes at least one of a sensing requirement, first configuration information of the sensing signal, capability information of the first network device, and recommended configuration information of the first network device.

In this embodiment, the terminal and/or the second network device may determine the configuration information of the sensing signal based on the first indication information, and may further determine the first measurement amount based on the first indication information. For example, the terminal may determine the configuration information of the sensing signal based on at least one of the first configuration information, the second configuration information of the second network device, and third configuration information determined by the terminal. The terminal may alternatively determine the configuration information of the sensing signal based on at least one of the capability information of the first network device, the capability information of the second network device, and third configuration information determined by the terminal. The terminal may further determine the first measurement amount based on the sensing requirement in the first indication information and/or the second indication information, and send the first measurement amount to the first network device, so that the first network device measures the sensing signal based on the first measurement amount to obtain the measurement result.

After the first network device sends the first indication information to the second network device and/or the terminal, the method may further include:
receiving a first sensing requirement response message or a second sensing requirement response message that is sent by the terminal, where the first sensing requirement response information is used to indicate that the terminal agrees to participate in a sensing service, and the second sensing requirement response information is used to indicate that the terminal refuses to participate in a sensing service.

The first network device sends the first indication information to the second network device and/or the terminal, and the terminal determines, based on the first indication information, whether to agree to participate in the sensing service, sends the first sensing requirement response message to the first network device in a case that the terminal determines to agree to participate in the sensing service, and sends the second sensing requirement response message to the first network device in a case that the terminal refuses to participate in the sensing service.

In this embodiment, the terminal may choose to agree to or refuse to participate in the sensing procedure in the following method: After the second network device or the first network device sends a sensing requirement to the terminal, the terminal agrees or refuses, and the second network device or the first network device selects, from terminals that agree the sensing requirement, a terminal that participates in the sensing service. After selecting the terminal that participates in the sensing service, the second network device or the first network device sends a sensing request participation message to the terminal, and the terminal agrees or refuses.

Whether the terminal can participate in a related sensing service may be agreed upon in advance, and may be stored in a related storage node of the second network device (that is, a core network), such as a unified data repository (Unified Data Repository, UDR). After receiving a sensing requirement and selecting a terminal that participates in the sensing service, the core network accesses a storage-related terminal, to obtain information about whether the terminal can participate in the related sensing service. If the first network device or the second network device does not receive, within specified time, the sensing requirement response message fed back by the terminal, it is considered by default that the terminal refuses to participate in the sensing service.

It should be noted that before sending the second indication information to the first network device or the terminal, the second network device needs to determine a target network device and a target terminal that participate in a sensing service, that is, the first network device and the terminal in this embodiment of this application. The terminal may be determined by using at least one of the following:
(a) capability-related information reported by the terminal to the second network device, that is, whether the terminal is an associated terminal that participates in the sensing service can be determined based on related information in a capability reported by the terminal to the core network;
(b) information, fed back by the terminal to the second network device, of whether the terminal agrees or refuses to participate in the sensing service, for example, in a case that the terminal agrees to participate in the sensing service, the terminal is a terminal associated with a sensing requirement;
(c) information about whether the terminal participates in the sensing service as agreed in advance, for example, if it is agreed in advance that the terminal participates in the sensing service, the terminal is a terminal associated with a sensing requirement;
(d) whether a terminal that participates in the sensing service feeds back sensing response information corresponding to a sensing requirement within specified time, for example, if the terminal does not feed back the sensing response information corresponding to the sensing requirement within the specified time, it is considered by default that the terminal refuses to participate in the sensing service;
(e) prior information of the terminal, where the prior information of the terminal includes at least one of a location of the terminal and an area in which the terminal is located; and
(f) information about a base station accessed by the terminal, that is, being determined based on whether the terminal accesses a base station associated with the sensing service; if the terminal accesses the base station associated with the sensing service, the terminal is a terminal that participates in the sensing service, that is, the associated terminal.

The first network device is determined by using at least one of the following:
(1) information about a terminal connected to the first network device, that is, whether a base station is an access base station that participates in the sensing service is determined based on a terminal connected to the base station; in this method, associated UE needs to be determined before an associated base station is determined;
(2) capability-related information reported by the first network device to the second network device, that is, whether a base station is an associated base station that participates in the sensing service can be determined based on related information in a capability reported by the base station to the core network; and
(3) prior information of the first network device, where the prior information of the first network device includes at least one of a location of a base station and an area in which the base station is located.

Optionally, after the first network device obtains, based on the sensing signal, the measurement result corresponding to the first measurement amount, the method may further include:
obtaining a sensing result fed back by the second network device or the terminal based on the first indication information, where the sensing result is a sensing result obtained by the second network device or the terminal based on the measurement result of the first network device.

After obtaining the measurement result by measuring the sensing signal, the first network device may send the measurement result to the second network device and/or the terminal, and the second network device and/or the terminal complete/completes conversion from the measurement result to the sensing result, and the second network device and/or the terminal feed/feeds back the sensing result to the first network device.

In an optional embodiment, the method further includes:
obtaining, by the first network device, a first measurement amount sent by a second network device or the terminal;
   or
determining the first measurement amount based on a sensing requirement.

Before obtaining the measurement result corresponding to the first measurement amount based on the sensing signal, the first network device further needs to determine the first measurement amount. The first measurement amount may be determined and sent by the second network device and/or the terminal, or may be determined by the first network device based on the sensing requirement. The sensing requirement may be determined based on the second indication information of the second network device and/or the third indication information of the terminal, or may be a sensing requirement generated by the first network device. In a case that the first measurement amount is sent by the second network device or the terminal, the second network device or the terminal determines the first measurement amount based on the sensing requirement.

The second network device may send, to the first network device, a first measurement amount related to a sensing signal that needs to be measured or reported by the first network device, and the first network device measures, based on the first measurement amount, the sensing signal sent by the terminal, and obtains a measurement result; and/or the first network device sends the first measurement amount to the terminal, the terminal may send the first measurement amount to the first network device, and the first network device measures, based on the first measurement amount, a sensing signal sent by the terminal, and obtains a measurement result.

Specifically, the first measurement amount includes at least one of the following:
(a) a channel matrix H;
(b) received signal strength indication (Received Signal Strength Indication, RSSI);
(c) reference signal received power (Reference Signal Receiving Power, RSRP);
(d) channel state information (Channel State Information, CSI);
(e) power, delay and/or angle information of each path on a multi-path channel;
(f) Doppler spread;
(g) Doppler frequency shift;
(h) a phase difference between a first antenna and a second antenna;
(l) a delay difference between the first antenna and the second antenna;
(j) a feature difference between an inphase signal and a quadrature signal; and
(k) angle-related information, such as an angle of arrival or an angle of departure.

It should be noted that the first network device measures the sensing signal based on the foregoing measurement amount to obtain a corresponding measurement result, and the measurement result may be directly used as a sensing result of the sensing service, or the measurement result needs to be further calculated and converted into an expected sensing result. The sensing result may include at least one of the following:
(1) feature information of a target object, which may be understood as information that can reflect an attribute or a state of the target object, where the feature information of the target object may be at least one of the following: a location of the target object, a speed of the target object, an acceleration of the target object, a material of the target object, a shape of the target object, a category of the target object, a radar cross section (Radar Cross Section, RCS) of the target object, a polarization scattering feature, and the like;
(2) related information of a target event, which may be understood as information related to the target event, that is, information that can be detected/sensed when the target event occurs, and may be falling down detection, intrusion detection, quantity counting, indoor positioning, gesture recognition, lip language recognition, gait recognition, expression recognition, respiration monitoring, heart rate monitoring, or the like; and
(3) related information of a target environment, which may include at least one of the following: humidity, brightness, temperature, atmospheric pressure, air quality, weather conditions, topography, building/vegetation distribution, population counting, population density, vehicle density, and the like.

Optionally, conversion from the measurement result to the sensing result may be completed by any one of the first network device, the second network device, and the terminal.

In an optional embodiment, after the obtaining, based on the sensing signal, a measurement result corresponding to the first measurement amount, the method further includes: sending the measurement result to the second network device or the terminal.

In this embodiment, conversion between the measurement result and the sensing result may be completed on the second network device or the terminal. After obtaining the measurement result corresponding to the first measurement amount, the first network device sends the measurement result to the second network device or the terminal. The first network device or the terminal determines the sensing result based on the measurement result, and feeds back the sensing result to a sensing service initiator.

In an optional embodiment, after the obtaining, based on the sensing signal, the measurement result corresponding to the first measurement amount, the method further includes: determining a sensing result based on the measurement result; and sending the sensing result to the second network device or the terminal.

In this embodiment, conversion between the measurement result and the sensing result may be completed by the first network device. After obtaining the measurement result corresponding to the first measurement amount, the first network device determines the sensing result based on the measurement result, and sends the sensing result to the sensing service initiator (that is, to the second network device or the terminal).

It should be noted that the initiating end of the sensing service may be any one of the first network device, the second network device, the terminal, or the third-party application. After the sensing result is obtained, the sensing result is sent to the originating end of the sensing service, where the sensing result may be directly sent to the originating end of the sensing service by a party that obtains the sensing result, or may be sent to the originating end of the sensing service by using another device (for example, a core network).

Optionally, in an embodiment of this application, the second network device includes an access and mobility management function (Access and Mobility Management Function, AMF) entity or a sensing function entity. In other words, the second network device may be a core network, and may be an AMF of the core network, a sensing network function network element of the core network, or a sensing network element of the core network.

The sensing function entity is configured to exchange target information with a target terminal, a serving base station of the target terminal, or a base station associated with a target area, to obtain a target sensing result or a sensing measurement result (such as an uplink measurement result or a downlink measurement result). The target terminal may be a terminal that participates in the sensing service, and the base station may be a base station that participates in the sensing service. The target information is, for example, a sensing requirement, a sensing capability, sensing auxiliary data, a sensing measurement amount, or a sensing result.

Optionally, the sensing function entity may be located on a core network side, or may be located on an access network side, that is, the sensing function entity may be located on the second network device (that is, a core network), or may be located on the first network device. If the sensing function entity is located on the first network device, compared with the second network device, all procedures of the sensing service can be completed on a radio access network (Radio Access Network, RAN) (for a case that the first network device triggers the sensing service or the terminal triggers the sensing service).

The sensing function entity may directly exchange a sensing request and a sensing result with an application server (for example, an application server of an operator); or the sensing function entity exchanges a sensing request and a sensing result with the AMF, and the AMF may directly or indirectly (for example, by using a gateway mobile location center (Gateway Mobile Location Center, GMLC) and a network exposure function (Network Exposure Function, NEF)) exchange the sensing request and the sensing result with the application server (for example, a third-party application server).

The sensing function entity may be a new network element or an existing network function/network element, such as a location management function (Location Management Function, LMF), but a new sensing-related function is added.

Specifically, the sensing function entity may meet at least one of the following:
(1) management of overall coordination and scheduling of resources required for sensing, for example, sensing resources of a base station and/or UE;
(2) calculation of a sensing result and estimation of sensing precision;
(3) verification of a sensing result and estimation of sensing precision;
(4) support of an immediate sensing request;
(5) support of a delayed sensing request;
(6) support of a periodic or event-triggered sensing request;
(7) support of cancellation of periodic or triggered sensing behavior;
(8) corresponding to at least one AMF entity; a plurality of sensing function entities may corresponding to one AMF, where after receiving a sensing requirement, the AMF may select one or more sensing function entities that participate in sensing, and factors considered during selection of the sensing function entity include at least request QoS (such as sensing precision, response time, or a sensing QoS level), an access type (3GPP access/non-3GPP access), an AN type of target UE (such as 5G NR or eLTE) and a serving AN node (such as a gNodeB or an NG-eNodeB), RAN configuration information, a sensing network function/sensing network element capability, a sensing network function/sensing network element load, a sensing network function/sensing network element location, an indication of single event reporting or a plurality of event reporting, event reporting duration, network slice information, and the like; and
(9) determining a sensing method based on at least one of a type of a sensing client, sensing quality of service (Quality of Service, QoS), a sensing capability of the terminal, and a sensing capability of a network device, where the sensing method includes at least one of the following: sending, by a first network node, a sensing signal, and receiving, by a second network node, the sensing signal; sending and receiving, by a network node, a sensing signal; sending, by a network node, a sensing signal, and receiving, by a terminal associated with the network node, the sensing signal; sending, by a terminal, a sensing signal, and receiving, by a network node associated with the terminal, the sensing signal; sending, by a first terminal, a sensing signal, and receiving, by a second terminal, the sensing signal; and sending and receiving, by a terminal, a sensing signal.

The sensing function entity may determine a used sensing method based on factors such as a possible type of a sensing client, required sensing QoS, a sensing capability of UE, and a sensing capability of a base station. The sensing method includes: a base station A performs sending and a base station B performs receiving; a base station performs sending and UE performs receiving; a base station A performs sending and receiving; UE performs sending and a base station performs receiving; UE performs sending and receiving; UE A performs sending and UE B performs receiving; and the like.

It should be noted that the second network entity, the application server, or another node may further complete a monitoring process, for example, whether the terminal can participate in a procedure such as sensing, charging, and authorization.

In this embodiment of this application, the first network device receives the sensing signal sent by the terminal, and obtains, based on the sensing signal, the measurement result corresponding to the first measurement amount, so that a wireless sensing procedure in which the terminal sends the sensing signal and the base station receives the sensing signal is implemented.

It should be noted that the sensing service may be initiated by any one of a third-party application, a core network (that is, the second network device), a base station (that is, the first network device), and the terminal. When the sensing service is initiated by the base station, the base station that initiates the sensing service may be a base station that participates in the sensing service, or may be another base station. When the sensing service is initiated by the terminal, the terminal that initiates the sensing service may be a terminal that participates in the sensing service, or may be another terminal. Specific descriptions are provided below by using embodiments.

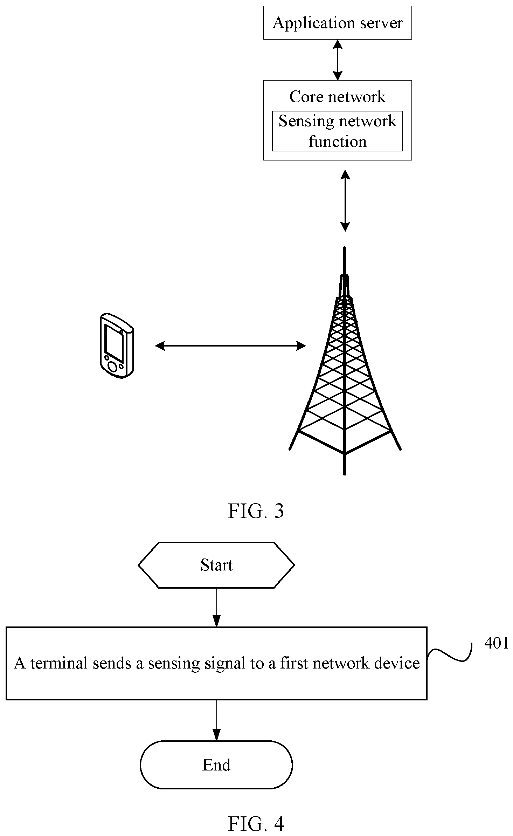

Example 1: The third-party application initiates a sensing service, the terminal sends a sensing signal, and the base station receives the sensing signal. As shown in FIG. 3, the following steps are included:
Step 1: The third-party application initiates a sensing service, and sends a sensing requirement to the application server, and the application server receives the sensing requirement of the third-party application, where the sensing requirement may include an expected sensing result and/or sensing precision.

The application server may be an on-net server such as an IP multimedia subsystem (IP Multimedia Subsystem, IMS); or the application server may be an off-net server.

Step 2: The application server sends the sensing requirement to a core network, where the core network is, for example, an AMF, a sensing network function of the core network, or a sensing network element. The application server may send the sensing requirement to the AMF, and the AMF sends the sensing requirement to the sensing network function or the sensing network element.

Step 3: The core network (for example, the sensing network function or the sensing network element) may determine an associated base station and UE (that is, a base station and UE that participate in the sensing service) based on the sensing requirement, and send the sensing requirement to the base station and the UE. It should be noted that if a related configuration and a measurement amount of the sensing signal are completely determined by the core network and/or the base station, the sensing requirement does not need to be sent to the UE; and if the related configuration and the measurement amount of the sensing signal are completely determined by the core network and/or the UE, the sensing requirement does not need to be sent to the base station.

A method used by the core network to determine the associated base station based on the sensing requirement may include one of the following:
(1) The associated base station is determined based on information about a terminal connected to the base station, that is, whether the base station is an access base station of associated UE that participates the sensing service is determined based on the terminal connected to the base station. In this method, the associated UE needs to be determined before the associated base station is determined.
(2) The associated base station is determined based on capability-related information reported by the base station to the core network, that is, whether the base station is an associated base station that participates in the sensing service may be determined based on related information in a capability reported by the base station to the core network.
(3) The associated base station is determined based on prior information related to the base station, where the prior information is, for example, a location of the base station or an area in which the base station is located.

A method used by the core network to determine the associated terminal based on the sensing requirement may include one of the following:
(a) The associated terminal is determined based on information about a base station accessed by the terminal, that is, based on whether the terminal accesses an associated base station that participates in the sensing service. If the terminal accesses the base station that participates in the sensing service, the terminal is a terminal that participates in the sensing service, that is, the associated terminal. In this method, the associated base station needs to be determined before the associated terminal is determined. Optionally, the associated base station may be determined based on any one of the foregoing manners (1) to (3). In the foregoing method (1), when the associated base station is determined based on indication information of whether the base station is an access device of the terminal, the associated terminal may be determined based on any one of manners (a) to (c) in this embodiment.
(b) The associated terminal is determined based on capability-related information reported by the terminal to the core network, that is, whether the terminal is an associated terminal that participates in the sensing service may be determined based on related information in a capability reported by the terminal to the core network.
(c) The associated terminal is determined based on prior information related to the terminal, where the prior information is, for example, a location of the terminal or an area in which the terminal is located.
(d) The associated terminal is determined based on information, fed back by the terminal to the core network, about whether the terminal agrees or refuses to participate in the sensing service, and in a case that the terminal agrees to participate in the sensing service, the terminal is a terminal associated with the sensing requirement.
(e) The associated terminal is determined based on information about whether the terminal participates in the sensing service as agreed in advance. For example, if it is agreed in advance that the terminal participates in the sensing service, the terminal is a terminal associated with the sensing requirement.
(f) The associated terminal is determined based on whether a terminal that participates in the sensing service feeds back sensing response information corresponding to the sensing requirement within specified time. For example, if the terminal does not feed back the sensing response information corresponding to the sensing requirement within the specified time, it is considered by default that the terminal refuses to participate in the sensing service.

Step 4: At least one of the first network device, the second network device, and the terminal may determine configuration information of the sensing signal based on the sensing requirement. After determining the configuration information of the sensing signal, a determining party sends the configuration information to a remaining party.

The configuration information of the sensing signal may be determined by at least one of the first network device, the second network device, and the terminal. After determining the configuration information, the determining party of the configuration information sends the configuration information the remaining party. The remaining party may send capability information and/or recommended configuration to the determining party, and the determining party comprehensively determines the configuration information. Optionally, the configuration information of the sensing signal may be determined by one party. The determining party may determine specific configuration information based on a pre-agreed mapping relationship between the sensing requirement and the configuration information. For example, if the determining party of the configuration information of the sensing signal is the core network, the core network sends the configuration information of the sensing signal to the base station and the UE. If the configuration information of the sensing signal is jointly determined by the core network and the base station, the core network and the base station notify each other of configuration information of the sensing signal that is respectively determined by the core network and the base station, and then the at least one of the two sends the configuration information of the sensing signal to the UE.

When the configuration information of the sensing signal is jointly determined by a plurality of parties in the first network device, the second network device, and the terminal, for example, the core network determines five of ten parameters of the configuration information, and the base station determines the other five parameters. Optionally, a determining party may also report a capability or recommended configuration, and a non-determining party may also report capability information or recommended configuration to the determining party. For example, if the core network and the base station jointly determine the configuration information, the core network and the base station may notify each other of capability information or recommended configuration, and the UE may also send capability information or recommended configuration to at least one of the core network and the base station.

Specifically, the configuration information of the sensing signal may include at least one of the following:
a waveform, a subcarrier spacing, a guard interval, bandwidth, burst duration, a time domain interval, transmit signal power, a signal format, a signal direction, a time resource, a frequency resource, and a quasi-colocation QCL relationship.

Step 5: The core network sends, to the base station and the UE, a first measurement amount that is related to the sensing signal and that needs to be measured/reported by the base station. Optionally, the first measurement amount that needs to be measured/reported is determined based on the sensing requirement, and may not need to be indicated by separate signaling (for example, a mapping table from the sensing requirement to the measurement amount is established).

The first measurement amount may include at least one of the following: a channel matrix H, channel state information CSI, RSRP, RSSI, power of each path on a multi-path channel, a delay of each path on a multi-path channel, an angle of each path on a multi-path channel, Doppler spread, Doppler frequency shift, a phase difference between a first antenna and a second antenna, a delay difference between the first antenna and the second antenna, and angle-related information (for example, an angle of arrival or an angle of departure).

Step 6: The terminal sends the sensing signal based on the configuration information of the sensing signal.

Step 7: The base station receives the sensing signal based on the configuration information of the sensing signal, and obtains a measurement result corresponding to the first measurement amount.

Step 8: The measurement result may be directly used as a sensing result, or the measurement result needs to be converted into a sensing result through further calculation and processing. The conversion between the measurement result and the sensing result may be completed by any one of the base station, the core network, and the terminal, which is specifically described below.

Manner (1): The conversion from the measurement result to the sensing result is completed in a network function or a network element (such as a sensing network function/sensing network element) of the core network, including:
(a) The base station sends the measurement result to a core network network function or network element (such as a sensing network function/sensing network element); or the base station sends the measurement result to the UE, and the UE sends the measurement result to a core network network function or network element (such as a sensing network function/sensing network element).
(b) A core network network function or network element (such as a sensing network function/sensing network element) sends the measurement result to the application server, and the application server determines the sensing result based on the measurement result; or
   a core network network function or network element (such as a sensing network function/sensing network element) determines the sensing result based on the measurement result, and sends the sensing result to the application server.
(c) The application server sends the sensing result to a third-party application.

Manner (2): The conversion from the measurement result to the sensing result is completed on the base station and includes:
(a) The base station determines the sensing result based on the measurement result, and sends the sensing result to a core network network function or network element (such as a sensing network function/sensing network element).
(b) A core network network function or network element (such as a sensing network function/sensing network element) sends the sensing result to the application server.
(c) The application server sends the sensing result to a third-party application.

Manner (3): The conversion from the measurement result to the sensing result is completed on the UE and includes:
(a) The base station sends the measured measurement result to the UE; or
   the base station sends the measurement result to a core network network function or network element (such as a sensing network function/sensing network element), and the core network function or network element (such as a sensing network function/sensing network element) sends the measurement result to the UE.
(b) The UE determines the sensing result based on the measurement result, and sends the sensing result to a core network network function or network element (such as a sensing network function/sensing network element).
(c) A core network network function or network element (such as a sensing network function/sensing network element) sends the sensing result to the application server.
(d) The application server sends the sensing result to a third-party application.

It should be noted that, in this example, message exchange (message sending/receiving) between the core network network function or network element (such as a sensing network function/sensing network element) and another node may be that the core network network function or network element (such as a sensing network function/sensing network element) directly performs direct sending, or may be that the core network network function or network element (such as a sensing network function/sensing network element) exchanges a message by using an AMF.

A charging function is completed on the core network or the application server.

The sensing signal in the foregoing example may be sent by a plurality of UEs, and the sensing signal may also be received by a plurality of base stations. In this case, the core network or the base station needs to determine a UE set that sends the sensing signal, and the core network needs to determine a base station set that receives the sensing signal, separately send one or more pieces of configuration information related to the sensing signal to corresponding a plurality of base stations and a plurality of UEs, and separately send measurement amounts related to the sensing signal that need to be measured by the receiving base station to the corresponding a plurality of base stations. Optionally, the configuration information related to the sensing signal needs to be exchanged between the plurality of sending base stations (for example, a base station that serves as a coordinator sends the configuration information related to the sensing signal to a plurality of UEs and sends a measurement amount related to the sensing signal to a plurality of base stations).

The base station in the foregoing procedure may be a TRP. In the foregoing procedure, information exchange between the core network network function or network element (such as a sensing network function/sensing network element) and the UE may be performed by using the base station, and the message is transparent to the base station, for example, non-access stratum (Non-Access Stratum, NAS) signaling.

Notes: The UE may choose to agree to or refuse to participate in a sensing procedure by using the following method:
After the core network network function or network element (such as a sensing network function/sensing network element) sends the sensing requirement to the UE, the UE agrees or refuses, and UE that participates in the sensing service is selected from UEs that agree to provide a sensing requirement (corresponding to the foregoing step 3).

After selecting the UE that participates in the sensing service (corresponding to step 3), the base station/core network sends a sensing request participation message to the associated UE, and the UE agrees or refuses.

Whether the UE can participate in a related sensing service is agreed in advance and is stored in a related storage node of the core network, such as a UDR. After receiving the sensing requirement and selecting the UE that participates in the sensing service (corresponding to the foregoing step 3), the core network network function or network element (such as a sensing network function/sensing network element) accesses the storage node that stores whether the associated UE can participate in the related sensing service, and obtains information about whether the UE can participate in the related sensing service.

Example 2: The core network (or a network management system or the base station) initiates the sensing service, the terminal sends the sensing signal, and the base station receives the sensing signal. The following steps are included:
Step 1: The core network AMF sends a sensing requirement to the sensing network function or the sensing network element; or the AMF receives a sensing requirement sent by the network management system, and forwards the sensing requirement to the sensing network function or the sensing network element; or the AMF receives a sensing requirement sent by the base station, and forwards the sensing requirement to the sensing network function or the sensing network element.
Step 2: The core network network function or network element (such as a sensing network function/sensing network element) determines an associated base station or UE based on a sensing requirement, and sends the sensing requirement to the associated base station and the UE. It should be noted that if a related configuration and a measurement amount of the sensing signal are completely determined by the core network and/or the base station, the sensing requirement does not need to be sent to the UE; and if the related configuration and the measurement amount of the sensing signal are completely determined by the core network and/or the UE, the sensing requirement does not need to be sent to the base station.

A method for determining the associated base station and UE is as follows:

A method used by the core network to determine the associated base station based on the sensing requirement may include one of the following:
(1) A base station that initiates the requirement is directly used as the associated base station (corresponding to a scenario in which the base station initiates to a sensing service requirement).
(2) The associated base station is determined based on information about a terminal connected to the base station, that is, whether the base station is an access base station of associated UE that participates the sensing service is determined based on the terminal connected to the base station. In this method, the associated UE needs to be determined before the associated base station is determined.
(3) The associated base station is determined based on capability-related information reported by the base station to the core network, that is, whether the base station is an associated base station that participates in the sensing service may be determined based on related information in a capability reported by the base station to the core network.
(4) The associated base station is determined based on prior information related to the base station, where the prior information is, for example, a location of the base station or an area in which the base station is located.

A method used by the core network to determine the associated terminal based on the sensing requirement may include one of the following:
(a) The associated terminal is determined based on information about a base station accessed by the terminal, that is, is determined based on whether the terminal accesses an associated base station that participates in the sensing service. If the terminal accesses the base station that participates in the sensing service, the terminal is a terminal that participates in the sensing service, that is, the associated terminal.
(b) The associated terminal is determined based on capability-related information reported by the terminal to the core network, that is, whether the terminal is an association terminal that participates in the sensing service may be determined based on related information in a capability reported by the terminal to the core network.
(c) The associated terminal is determined based on prior information related to the terminal, where the prior information is, for example, a location of the terminal or an area in which the terminal is located.
(d) The associated terminal is determined based on information, fed back by the terminal to the core network, about whether the terminal agrees or refuses to participate in the sensing service, and in a case that the terminal agrees to participate in the sensing service, the terminal is a terminal associated with the sensing requirement.
(e) The associated terminal is determined based on information about whether the terminal participates in the sensing service as agreed in advance. For example, if it is agreed in advance that the terminal participates in the sensing service, the terminal is a terminal associated with the sensing requirement.
(f) The associated terminal is determined based on whether a terminal that participates in the sensing service feeds back sensing response information corresponding to the sensing requirement within specified time. For example, if the terminal does not feed back the sensing response information corresponding to the sensing requirement within the specified time, it is considered by default that the terminal refuses to participate in the sensing service.

Step 3: Determine configuration information of the sensing signal based on the sensing requirement (for example, determine a bandwidth size of the sensing signal based on a sensing resolution requirement).

At least one of the first network device, the second network device, and the terminal may determine the configuration information of the sensing signal based on the sensing requirement. After determining the configuration information of the sensing signal, a determining party sends the configuration information to a remaining party. If a related configuration of the sensing signal is agreed in advance and is associated with the sensing requirement, the related configuration information of the sensing signal does not need to be indicated. Descriptions of the related configuration information of the sensing signal and a specific sending manner are the same as those in Example 1. Details are not described herein again.

Step 4: The core network network function or network element (such as a sensing network function/sensing network element) sends a first measurement amount related to the sensing signal to the base station and the UE. Optionally, the first measurement amount is determined based on the sensing requirement, and may not need to be indicate by separate signaling (for example, a mapping table from the sensing requirement to the measurement amount is established). The first measurement amount is the same as that in Embodiment 1. Details are not described herein again.

Step 5: The terminal sends the sensing signal based on the configuration information of the sensing signal.

Step 6: The base station receives the sensing signal based on the configuration information of the sensing signal, and obtains a measurement result corresponding to the first measurement amount.

Step 7: The measurement result may be directly used as a sensing result, or the measurement result needs to be converted into a sensing result through further calculation and processing. The conversion between the measurement result and the sensing result may be completed by any one of the base station, the core network, and the terminal, which is specifically described below.

Manner (1): The conversion from the measurement result to the sensing result is completed in a network function or a network element (such as a sensing network function/sensing network element) of the core network, including:
(a) The base station sends the measurement result to a core network network function or network element (such as a sensing network function/sensing network element); or
   the base station sends the measurement result to the UE, and the UE sends the measurement result to a core network network function or network element (such as a sensing network function/sensing network element).
(b) A core network network function or network element (such as a sensing network function/sensing network element) converts the measurement result into the sensing result.
(c) If the sensing requirement comes from a network management system, a core network network function or network element (such as a sensing network function/sensing network element) sends the sensing result to the network management system; or the core network sends the measurement result to a network management system, and the network management system converts the measurement result into the sensing result.

If the sensing requirement comes from the base station, the core network network function or network element (such as a sensing network function/sensing network element) sends the sensing result to the base station.

Manner (2): The conversion from the measurement result to the sensing result is completed on the base station and includes:
(a) The base station determines the sensing result based on the measurement result, and sends the sensing result to a core network network function or network element (such as a sensing network function/sensing network element).

If the sensing requirement comes from a network management system, the core network network function or network element (such as a sensing network function/sensing network element) sends the sensing result to the network management system.

If the sensing requirement comes from the base station, the core network network function or network element (such as a sensing network function/sensing network element) sends the sensing result to the base station.

Manner (3): The conversion from the measurement result to the sensing result is completed on the UE and includes:
(a) The base station sends the measured measurement result to the UE; or the base station sends the measurement result to a core network network function or network element (such as a sensing network function/sensing network element), and the core network function or network element (such as a sensing network function/sensing network element) sends the measurement result to the UE.
(b) The UE determines the sensing result based on the measurement result, and sends the sensing result to a core network network function or network element (such as a sensing network function/sensing network element).

If the sensing requirement comes from a network management system, the core network network function or network element (such as a sensing network function/sensing network element) sends the sensing result to the network management system.

If the sensing requirement comes from the base station, the core network network function or network element (such as a sensing network function/sensing network element) sends the sensing result to the base station.

It should be noted that, in this example, message exchange (message sending/receiving) between the core network network function or network element (such as a sensing network function/sensing network element) and another node may be that the core network network function or network element (such as a sensing network function/sensing network element) directly performs sending, or may be that the core network network function or network element (such as a sensing network function/sensing network element) exchanges a message by using an AMF.

A charging function is completed on the core network or the application server.

The sensing signal in the foregoing example may be sent by a plurality of UEs, and the sensing signal may also be received by a plurality of base stations. In this case, the core network or the base station needs to determine a UE set that sends the sensing signal, and the core network needs to determine a base station set that receives the sensing signal, separately send one or more pieces of configuration information related to the sensing signal to corresponding a plurality of base stations and a plurality of UEs, and separately send measurement amounts related to the sensing signal that need to be measured by the receiving base station to the corresponding a plurality of base stations. Optionally, the configuration information related to the sensing signal needs to be exchanged between the plurality of sending base stations (for example, a base station that serves as a coordinator sends the configuration information related to the sensing signal to a plurality of UEs and sends a measurement amount related to the sensing signal to a plurality of base stations). The base station in this example may be a TRP.

In this example, information exchange between the core network network function or network element (such as a sensing network function/sensing network element) and the UE may be performed by using the base station, and the message is transparent to the base station, for example, NAS signaling.

The UE may choose to agree to or refuse to participate in a sensing procedure by using the following method:
After the core network network function or network element (such as a sensing network function/sensing network element) sends the sensing requirement to the UE, the UE agrees or refuses, and UE that participates in the sensing service is selected from UEs that agree to provide a sensing requirement (corresponding to the foregoing step 2).

After selecting the UE that participates in the sensing service (corresponding to step 2 in this example), the base station/core network sends a sensing request participation message to the associated UE, and the UE agrees or refuses.

Whether the UE can participate in a related sensing service is agreed in advance and is stored in a related storage node of the core network, such as a UDR. After receiving the sensing requirement and selecting the UE that participates in the sensing service (corresponding to step 2 in this example), the core network network function or network element (such as a sensing network function/sensing network element) accesses the storage node that stores whether the associated UE can participate in the related sensing service, and obtains information about whether the UE can participate in the related sensing service.

Example 3: The terminal initiates the sensing service, the terminal sends the sensing signal, and the base station receives the sensing signal. The following steps are included:
Step 1: The UE sends the sensing requirement or related configuration information of the sensing signal to the core network AMF by using NAS signaling.
Step 2: The AMF sends the sensing requirement to a sensing network function/sensing network element.
Step 3: A core network network function or network element (such as a sensing network function/sensing network element) determines an associated base station or UE based on a sensing requirement (which may include or not include UE that initiates the sensing service), and sends the sensing requirement to the associated base station and UE. It should be noted that if a related configuration of the sensing signal and a measurement amount are completely determined by the core network and/or the base station, the sensing requirement does not need to be sent to the UE; and if the related configuration of the sensing signal and the measurement amount are completely determined by the core network and/or the UE, the sensing requirement does not need to be sent to the base station.

A method for determining the associated base station and UE is as follows:

A method used by the core network to determine the associated base station based on the sensing requirement may include one of the following:
(1) The associated base station is determined based on information about a terminal connected to the base station, that is, whether the base station is an access base station of associated UE that participates the sensing service is determined based on the terminal connected to the base station. In this method, the associated UE needs to be determined before the associated base station is determined.
(2) The associated base station is determined based on capability-related information reported by the base station to the core network, that is, whether the base station is an associated base station that participates in the sensing service may be determined based on related information in a capability reported by the base station to the core network.
(3) The associated base station is determined based on prior information related to the base station, where the prior information is, for example, a location of the base station or an area in which the base station is located.

A method used by the core network to determine the associated terminal based on the sensing requirement may include one of the following:
(a) A terminal that initiates the sensing service is directly used as the associated terminal.
(b) The associated terminal is determined based on information about a base station accessed by the terminal, that is, is determined based on whether the terminal accesses an associated base station that participates in the sensing service. If the terminal accesses the base station that participates in the sensing service, the terminal is a terminal that participates in the sensing service, that is, the associated terminal.
(c) The associated terminal is determined based on capability-related information reported by the terminal to the core network, that is, whether the terminal is an association terminal that participates in the sensing service may be determined based on related information in a capability reported by the terminal to the core network.
(d) The associated terminal is determined based on prior information related to the terminal, where the prior information is, for example, a location of the terminal or an area in which the terminal is located.

Step 4: At least one of the first network device, the second network device, and the terminal may determine configuration information of the sensing signal based on the sensing requirement. After determining the configuration information of the sensing signal, a determining party sends the configuration information to a remaining party.

Step 5: The determining party of the configuration information of the sensing signal sends the related configuration information of the sensing signal to the remaining party. If a related configuration of the sensing signal is agreed in advance and associated with the sensing requirement, the related configuration information of the sensing signal does not need to be indicated. Descriptions of the configuration information of the sensing signal and a specific sending manner are the same as those in Example 1. Details are not described herein again.

Step 6: The core network network function or network element (such as a sensing network function/sensing network element) sends a first measurement amount related to the sensing signal to the base station and the UE. Optionally, the first measurement amount is determined based on the sensing requirement, and may not need to be indicate by separate signaling (for example, a mapping table from the sensing requirement to the measurement amount is established). The first measurement amount is the same as that in Embodiment 1. Details are not described herein again.

Step 7: The terminal sends the sensing signal based on the configuration information of the sensing signal.

Step 8: The base station receives the sensing signal based on the configuration information of the sensing signal, and obtains a measurement result corresponding to the first measurement amount.

Step 9: The measurement result may be directly used as a sensing result, or the measurement result needs to be converted into a sensing result through further calculation and processing. The conversion between the measurement result and the sensing result may be completed by any one of the base station, the core network, and the terminal, which is specifically described below.

Manner (1): The conversion from the measurement result to the sensing result is completed in a network function or a network element (such as a sensing network function/sensing network element) of the core network, including:
(a) The base station sends the measurement result to a core network network function or network element (such as a sensing network function/sensing network element); or the base station sends the measurement result to the UE, and the UE sends the measurement result to a core network network function or network element (such as a sensing network function/sensing network element).
(b) A core network network function or network element (such as a sensing network function/sensing network element) converts the measurement result into the sensing result.
(c) A core network network function or network element (such as a sensing network function/sensing network element) sends the sensing result to the UE (by using NAS signaling).

Manner (2): The conversion from the measurement result to the sensing result is completed on the base station and includes:
(a) The base station converts the measurement result into the sensing result, and sends the sensing result to a core network network function or network element (such as a sensing network function/sensing network element).
(b) A core network network function or network element (such as a sensing network function/sensing network element) send the sensing result to the UE (by using NAS signaling).

Manner (3): The conversion from the measurement result to the sensing result is completed on the UE and includes:
(a) The base station sends the measured measurement result to the UE; or the base station sends the measurement result to a core network network function or network element (such as a sensing network function/sensing network element), and the core network function or network element (such as a sensing network function/sensing network element) sends the measurement result to the UE.
(c) The UE determines the sensing result based on the measurement result.

It should be noted that, in this example, message exchange (message sending/receiving) between the core network network function or network element (such as a sensing network function/sensing network element) and another node may be that the core network network function or network element (such as a sensing network function/sensing network element) directly performs sending, or may be that the core network network function or network element (such as a sensing network function/sensing network element) exchanges a message by using an AMF. A charging function is implemented on the core network or the application server.

The sensing signal in this example may be sent by a plurality of UEs, and the sensing signal may also be received by a plurality of base stations. In this case, the core network or the base station needs to determine a UE set that sends the sensing signal, and the core network needs to determine a base station set that receives the sensing signal, separately send one or more pieces of configuration information related to the sensing signal to corresponding a plurality of base stations and a plurality of UEs, and separately send measurement amounts related to the sensing signal that need to be measured by the receiving base station to the corresponding a plurality of base stations. Optionally, the configuration information related to the sensing signal needs to be exchanged between the plurality of sending base stations (for example, a base station that serves as a coordinator sends the configuration information related to the sensing signal to a plurality of UEs and sends a measurement amount related to the sensing signal to a plurality of base stations). The base station in this example may be a TRP.

In this example, information exchange between the core network network function or network element (such as a sensing network function/sensing network element) and the UE may be performed by using the base station, and the message is transparent to the base station. A sensing requirement in this scenario is not a requirement of the UE. The UE may choose to refuse to participate in a sensing procedure in the following method:

After the core network network function or network element (such as a sensing network function/sensing network element) sends the sensing requirement to the UE, the UE agrees or refuses, and UE that participates in the sensing service is selected from UEs that agree to provide a sensing requirement (corresponding to the foregoing step 3).

After selecting the UE that participates in the sensing service (corresponding to the foregoing step 3), the base station/core network sends a sensing request participation message to the associated UE, and the UE agrees or refuses.

Whether the UE can participate in a related sensing service is agreed in advance and is stored in a related storage node of the core network, such as a UDR. After receiving the sensing requirement and selecting the UE that participates in the sensing service (corresponding to the foregoing step 3), the core network network function or network element (such as a sensing network function/sensing network element) accesses the storage node that stores whether the associated UE can participate in the related sensing service, and obtains information about whether the UE can participate in the related sensing service.

A wireless sensing-related procedure in which the terminal sends a sensing signal is provided in this embodiment of this application, and includes a related sensing procedure in which the terminal sends a sensing signal and the base station receives the sensing signal, signaling exchange between different sensing nodes, adding of a function of a sensing network function/sensing network element, and the like.

As shown in FIG. 4, an embodiment of this application further provides a method for measuring a sensing signal, applied to a terminal and including:
Step 401: The terminal sends a sensing signal to a first network device.

Optionally, the sending a sensing signal to a first network device includes:
determining configuration information of the sensing signal; and
sending the sensing signal to the first network device based on the configuration information.

Optionally, the determining configuration information of the sensing signal includes:
receiving first indication information sent by the first network device and/or second indication information sent by a second network device; and
determining the configuration information of the sensing signal based on the first indication information and/or the second indication information; where
the first indication information includes at least one of a sensing requirement, first configuration information of the sensing signal, capability information of the first network device, and recommended configuration information of the first network device; and
the second indication information includes at least one of a sensing requirement, second configuration information of the sensing signal, capability information of the second network device, and recommended configuration information of the second network device.

Optionally, the configuration information of the sensing signal includes at least one of the following:
first configuration information, where the first configuration information is configuration information of the sensing signal that is determined by the first network device;
second configuration information, where the second configuration information is configuration information of the sensing signal that is determined by the second network device; and
third configuration information, where the third configuration information is configuration information of the sensing signal that is determined by the terminal.

Optionally, the terminal determines the third configuration information by using at least one of the following:
a sensing requirement;
capability information of the first network device;
recommended configuration information of the first network device;
capability information of the second network device; and
recommended configuration information of the second network device.

Optionally, after the receiving first indication information sent by the first network device and/or second indication information sent by a second network device, the method further includes:
sending first sensing requirement response information to the first network device or the second network device in a case that it is determined, based on the first indication information and/or the second indication information, to participate in a sensing service, where the first sensing requirement response information is used to indicate that the terminal agrees to participate in the sensing service; or
sending second sensing requirement response information to the first network device or the second network device in a case that it is determined, based on the first indication information and/or the second indication information, not to participate in a sensing service, where the second sensing requirement response information is used to indicate that the terminal refuses to participate in the sensing service.

Optionally, the configuration information of the sensing signal includes at least one of the following:
a waveform of the sensing signal;
a subcarrier spacing of the sensing signal;
a guard interval of the sensing signal; and
bandwidth of the sensing signal; and
burst duration of the sensing signal;
a time domain interval of the sensing signal;
transmit signal power of the sensing signal;
a signal format of the sensing signal;
a signal direction of the sensing signal;
a time resource of the sensing signal;
a frequency resource of the sensing signal; and
a quasi-colocation QCL relationship of the sensing signal.

Optionally, the method further includes:
obtaining, by the terminal, a first measurement amount sent by the first network device or a second network device;
or
determining the first measurement amount based on a sensing requirement.

Optionally, after the sending a sensing signal to a first network device, the method further includes:
obtaining a measurement result sent by the first network device, where the measurement result is a measurement result that is corresponding to a first measurement amount and that is obtained by the first network device based on the sensing signal, and the first measurement amount is a measurement amount related to the sensing signal; and
determining a sensing result based on the measurement result, or sending the measurement result to a second network device.

Optionally, after the sending a sensing signal to a first network device, the method further includes:
obtaining a measurement result sent by the first network device, where the measurement result is a measurement result that is corresponding to a first measurement amount and that is obtained by the first network device based on the sensing signal, and the first measurement amount is a measurement amount related to the sensing signal; and
determining a sensing result based on the measurement result, or sending the measurement result to a second network device.

Optionally, before the sending a sensing signal to a first network device, the method further includes:
sending third indication information to the first network device and/or a second network device, where the third indication information includes at least one of a sensing requirement, third configuration information of the sensing signal, capability information of the terminal, and recommended configuration information of the terminal.

Optionally, the method further includes:
obtaining a target sensing result fed back by the first network device and/or the second network device based on the third indication information; where
the target sensing result includes a sensing result obtained based on a measurement result of at least one terminal.

Optionally, the first measurement amount includes at least one of the following:
a channel matrix H;
received signal strength indication RSSI;
reference signal received power RSRP;
channel state information CSI;
power, delay, and/or angle information of each path on a multi-path channel;
Doppler spread;
Doppler frequency shift;
a phase difference between a first antenna and a second antenna;
a delay difference between the first antenna and the second antenna;
a feature difference between an inphase signal and a quadrature signal; and
angle-related information.

Optionally, the sensing result includes at least one of the following:
feature information of a target object;
related information of a target event; and
related information of a target environment.

Optionally, the second network device includes an access and mobility management function AMF entity or a sensing function entity.

Optionally, the sensing function entity meets at least one of the following:
management of overall coordination and scheduling of resources required for sensing;
calculation of a sensing result and estimation of sensing precision;
verification of a sensing result and estimation of sensing precision;
support of an immediate sensing request;
support of a delayed sensing request;
support of a periodic or event-triggered sensing request;
support of cancellation of periodic or triggered sensing behavior;
corresponding to at least one AMF entity; and
determining a sensing method based on at least one of a type of a sensing client, sensing QoS, a sensing capability of the terminal, and a sensing capability of a network device, where the sensing method includes at least one of the following: sending, by a first network node, a sensing signal, and receiving, by a second network node, the sensing signal; sending and receiving, by a network node, a sensing signal; sending, by a network node, a sensing signal, and receiving, by a terminal associated with the network node, the sensing signal; sending, by a terminal, a sensing signal, and receiving, by a network node associated with the terminal, the sensing signal; sending, by a first terminal, a sensing signal, and receiving, by a second terminal, the sensing signal; and sending and receiving, by a terminal, a sensing signal.

It should be noted that a method for measuring a sensing signal applied to the terminal provided in this embodiment can implement processes implemented by the terminal in the foregoing method embodiment applied to the first network device, and a same technical effect can be achieved. To avoid repetition, details are not described herein again.

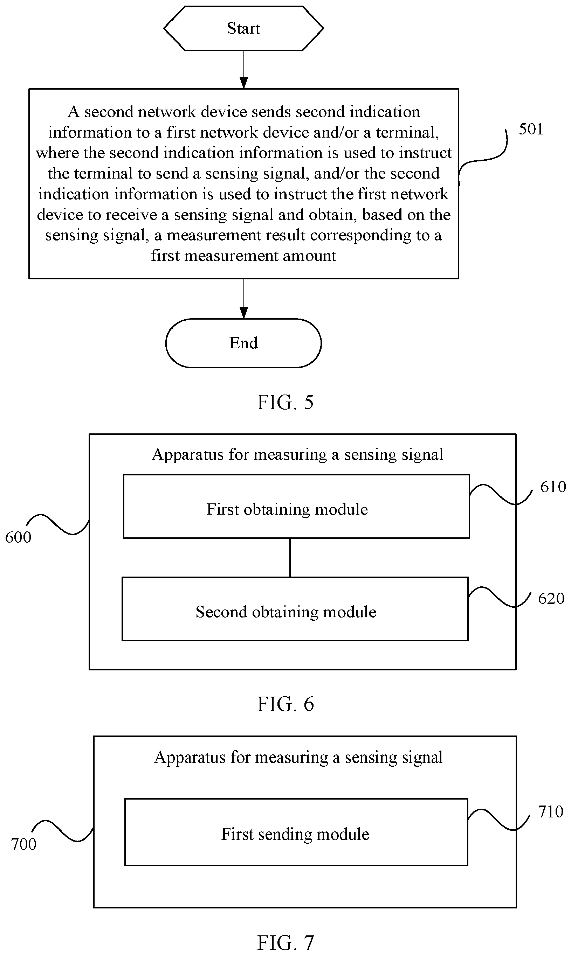

As shown in FIG. 5, an embodiment of this application further provides a method for measuring a sensing signal, applied to a second network device and including:
Step 501: The second network device sends second indication information to a first network device and/or a terminal, where the second indication information is used to instruct the terminal to send a sensing signal, and/or the second indication information is used to instruct the first network device to receive a sensing signal and obtain, based on the sensing signal, a measurement result corresponding to a first measurement amount.
The first measurement amount is a measurement amount related to the sensing signal.

Optionally, the second indication information includes at least one of a sensing requirement, second configuration information of the sensing signal, capability information of the second network device, and recommended configuration information of the second network device.

Optionally, before the sending second indication information to a first network device and/or a terminal, the method further includes:
receiving target indication information, where the target indication information includes at least one of first indication information sent by the first network device, third indication information sent by the terminal, and fourth indication information sent by an application server; and
determining configuration information of the sensing signal based on the target indication information; where
the first indication information includes at least one of a sensing requirement, first configuration information of the sensing signal, capability information of the first network device, and recommended configuration information of the first network device;
the third indication information includes at least one of a sensing requirement, third configuration information of the sensing signal, capability information of the terminal, and recommended configuration information of the terminal; and
the fourth indication information includes a sensing requirement.

Optionally, the configuration information of the sensing signal includes at least one of the following:
first configuration information, where the first configuration information is configuration information of the sensing signal that is determined by the first network device;
second configuration information, where the second configuration information is configuration information of the sensing signal that is determined by the second network device; and
third configuration information, where the third configuration information is configuration information of the sensing signal that is determined by the terminal.

Optionally, the second network device determines the second configuration information by using at least one of the following:
a sensing requirement;
capability information of the terminal;
recommended configuration information of the terminal;
recommended configuration information of the first network device; and
capability information of the first network device.

Optionally, the configuration information of the sensing signal includes at least one of the following:
a waveform of the sensing signal;
a subcarrier spacing of the sensing signal;
a guard interval of the sensing signal;
bandwidth of the sensing signal;
burst duration of the sensing signal;
a time domain interval of the sensing signal;
transmit signal power of the sensing signal;
a signal format of the sensing signal;
a signal direction of the sensing signal;
a time resource of the sensing signal;
a frequency resource of the sensing signal; and
a quasi-colocation QCL relationship of the sensing signal.

Optionally, after the sending second indication information to a first network device and/or a terminal, the method further includes:
receiving first sensing requirement response information or a second sensing requirement response message that is sent by the terminal or the first network device; where
the first sensing requirement response information is used to indicate that the terminal agrees to participate in a sensing service, and the second sensing requirement response information is used to indicate that the terminal refuses to participate in a sensing service.

Optionally, the method further includes:
determining the first measurement amount based on a sensing requirement; and
sending the first measurement amount to the first network device or the terminal.

Optionally, the first measurement amount includes at least one of the following:
a channel matrix H;
received signal strength indication RSSI;
reference signal received power RSRP;
channel state information CSI;
power, delay, and/or angle information of each path on a multi-path channel;
Doppler spread;
Doppler frequency shift;
a phase difference between a first antenna and a second antenna;
a delay difference between the first antenna and the second antenna;
a feature difference between an inphase signal and a quadrature signal; and
angle-related information.

Optionally, the method further includes:
obtaining a measurement result sent by the first network device or the terminal; and
determining a sensing result based on the measurement result.

Optionally, the method further includes:
sending the sensing result to the first network device or the terminal.

Optionally, the method further includes:
obtaining a sensing result sent by the first network device or the terminal, where the sensing result is obtained based on the measurement result.

Optionally, the sensing result includes at least one of the following:
feature information of a target object;
related information of a target event; and
related information of a target environment.

Optionally, the terminal is determined by using at least one of the following:
capability-related information reported by the terminal to the second network device;
information, fed back by the terminal to the second network device, about whether the terminal agrees or refuses to participate in a sensing service;
pre-agreed information about whether the terminal participates in a sensing service;
whether a terminal that participates in a sensing service feeds back sensing response information corresponding to the sensing requirement within specified time;
priori information of the terminal, where the priori information of the terminal includes at least one of a location of the terminal and an area in which the terminal is located; and
information about a base station accessed by the terminal.

Optionally, the first network device is determined by using at least one of the following:
information about a terminal connected to the first network device;
capability-related information reported by the first network device to the second network device; and
prior information of the first network device, where the prior information of the first network device includes at least one of a location of a base station and an area in which the base station is located.

Optionally, the second network device includes an access and mobility management function AMF entity or a sensing function entity.

Optionally, the sensing function entity meets at least one of the following:
management of overall coordination and scheduling of resources required for sensing;
calculation of a sensing result and estimation of sensing precision;
verification of a sensing result and estimation of sensing precision;
support of an immediate sensing request;
support of a delayed sensing request;
support of a periodic or event-triggered sensing request;
support of cancellation of periodic or triggered sensing behavior;
corresponding to at least one AMF entity; and
determining a sensing method based on at least one of a type of a sensing client, sensing QoS, a sensing capability of the terminal, and a sensing capability of a network device, where the sensing method includes at least one of the following: sending, by a first network node, a sensing signal, and receiving, by a second network node, the sensing signal; sending and receiving, by a network node, a sensing signal; sending, by a network node, a sensing signal, and receiving, by a terminal associated with the network node, the sensing signal; sending, by a terminal, a sensing signal, and receiving, by a network node associated with the terminal, the sensing signal; sending, by a first terminal, a sensing signal, and receiving, by a second terminal, the sensing signal; and sending and receiving, by a terminal, a sensing signal.

It should be noted that the method for measuring a sensing signal applied to the second network device provided in this embodiment can implement processes implemented by the second network device in the foregoing method embodiment applied to the first network device, and a same technical effect is achieved. To avoid repetition, details are not described herein again.

It should be noted that, the method for measuring a sensing signal provided in this embodiment of this application may be performed by an apparatus for measuring a sensing signal, or a control module that is in the apparatus for measuring a sensing signal and that is used for performing the method for measuring a sensing signal. In the embodiments of this application, that the apparatus for measuring a sensing signal performs the method for measuring a sensing signal is used as an example to describe the apparatus for measuring a sensing signal.

As shown in FIG. 6, an embodiment of this application further provides an apparatus 600 for measuring a sensing signal, applied to a first network device and including:
a first obtaining module 610, configured to obtain a sensing signal sent by a terminal; and
a second obtaining module 620, configured to obtain, based on the sensing signal, a measurement result corresponding to a first measurement amount; where
the first measurement amount is a measurement amount related to the sensing signal.

Optionally, the apparatus further includes:
a third sending module, configured to send first indication information to a second network device and/or the terminal; where
the first indication information includes at least one of a sensing requirement, first configuration information of the sensing signal, capability information of the first network device, and recommended configuration information of the first network device.

Optionally, the apparatus further includes:
a third obtaining module, configured to obtain a sensing result fed back by the second network device or the terminal based on the first indication information; where
the sensing result is a sensing result obtained by the second network device or the terminal based on the measurement result of the first network device.

Optionally, the first obtaining module includes:
a first determining unit, configured to determine configuration information of the sensing signal; and
a first receiving unit, configured to receive the sensing signal based on the configuration information.

Optionally, the first determining unit is specifically configured to:
receive second indication information sent by a second network device and/or third indication information sent by the terminal; and
determine configuration information of the sensing signal based on the second indication information and/or the third indication information; where
the second indication information includes at least one of a sensing requirement, second configuration information of the sensing signal, capability information of the second network device, and recommended configuration information of the second network device; and
the third indication information includes at least one of a sensing requirement, third configuration information of the sensing signal, capability information of the terminal, and recommended configuration information of the terminal.

Optionally, the configuration information of the sensing signal includes at least one of the following:
the first configuration information, where the first configuration information is configuration information of the sensing signal that is determined by the first network device;
the second configuration information, where the second configuration information is configuration information of the sensing signal that is determined by the second network device; and
the third configuration information, where the third configuration information is configuration information of the sensing signal that is determined by the terminal.

Optionally, the first network device determines the first configuration information by using at least one of the following:
the sensing requirement;
the capability information of the second network device;
the recommended configuration information of the second network device;
the capability information of the terminal; and
the recommended configuration information of the terminal.

Optionally, the apparatus further includes:
a first receiving module, configured to receive a first sensing requirement response message or a second sensing requirement response message that is sent by the terminal; and
a fourth sending module, configured to send the first sensing requirement response message or the second sensing requirement response message to the second network device; where
the first sensing requirement response information is used to indicate that the terminal agrees to participate in a sensing service, and the second sensing requirement response information is used to indicate that the terminal refuses to participate in a sensing service.

Optionally, the configuration information of the sensing signal includes at least one of the following:
a waveform of the sensing signal;
a subcarrier spacing of the sensing signal;
a guard interval of the sensing signal;
bandwidth of the sensing signal;
burst duration of the sensing signal;
a time domain interval of the sensing signal;
transmit signal power of the sensing signal;
a signal format of the sensing signal;
a signal direction of the sensing signal;
a time resource of the sensing signal;
a frequency resource of the sensing signal; and
a quasi-colocation QCL relationship of the sensing signal.

Optionally, the apparatus further includes:
a fourth obtaining module, configured to obtain a first measurement amount sent by a second network device or the terminal;
   or
a first determining module, configured to determine the first measurement amount based on a sensing requirement.

Optionally, the apparatus further includes:
a fifth sending module, configured to send the measurement result to a second network device or the terminal.

Optionally, the apparatus further includes:
a second determining module, configured to determine a sensing result based on the measurement result; and
a sixth sending module, configured to send the sensing result to a second network device or the terminal.

Optionally, the first measurement amount includes at least one of the following:
a channel matrix H;
received signal strength indication RSSI;
reference signal received power RSRP;
channel state information CSI;
power, delay, and/or angle information of each path on a multi-path channel;
Doppler spread;
Doppler frequency shift;
a phase difference between a first antenna and a second antenna;
a delay difference between the first antenna and the second antenna;
a feature difference between an inphase signal and a quadrature signal; and
angle-related information.

Optionally, the sensing result includes at least one of the following:
feature information of a target object;
related information of a target event; and
related information of a target environment.

Optionally, the second network device includes an access and mobility management function AMF entity or a sensing function entity.

Optionally, the sensing function entity meets at least one of the following:
management of overall coordination and scheduling of resources required for sensing;
calculation of a sensing result and estimation of sensing precision;
verification of a sensing result and estimation of sensing precision;
support of an immediate sensing request;
support of a delayed sensing request;
support of a periodic or event-triggered sensing request;
support of cancellation of periodic or triggered sensing behavior;
corresponding to at least one AMF entity; and
determining a sensing method based on at least one of a type of a sensing client, sensing QoS, a sensing capability of the terminal, and a sensing capability of a network device, where the sensing method includes at least one of the following: sending, by a first network node, a sensing signal, and receiving, by a second network node, the sensing signal; sending and receiving, by a network node, a sensing signal; sending, by a network node, a sensing signal, and receiving, by a terminal associated with the network node, the sensing signal; sending, by a terminal, a sensing signal, and receiving, by a network node associated with the terminal, the sensing signal; sending, by a first terminal, a sensing signal, and receiving, by a second terminal, the sensing signal; and sending and receiving, by a terminal, a sensing signal.

In this embodiment of this application, the terminal sends the sensing signal to the first network device, and the first network device receives the sensing signal, and may measure the sensing signal based on the first measurement amount related to the sensing signal, to obtain the measurement result, so that a wireless sensing procedure in which the terminal sends a sensing signal and a base station receives the sensing signal is implemented.

The apparatus for measuring a sensing signal in this embodiment of this application may be an apparatus or an electronic device with an operating system, or may be a component, an integrated circuit, or a chip in a terminal. The apparatus or the electronic device may be a mobile terminal, or a non-mobile terminal. For example, the mobile terminal may include but is not limited to the types of the foregoing listed terminals 11, and the non-mobile terminal may be a server, a network attached storage (Network Attached Storage, NAS), a personal computer (personal computer, PC), a television (television, TV), a teller machine, or a self-service machine. This is not specifically limited in this embodiment of this application.

The apparatus for measuring a sensing signal provided in this embodiment of this application can implement the processes implemented in the method embodiments in FIG. 1 to FIG. 3, and a same technical effect is achieved. To avoid repetition, details are not described herein again.

As shown in FIG. 7, an embodiment of this application further provides an apparatus 700 for measuring a sensing signal, applied to a terminal and including:
a first sending module 710, configured to send a sensing signal to a first network device.

Optionally, the first sending module includes:
a second determining unit, configured to determine configuration information of the sensing signal; and
a first sending unit, configured to send the sensing signal to the first network device based on the configuration information.

Optionally, the second determining unit is specifically configured to:
receive first indication information sent by the first network device and/or second indication information sent by a second network device; and
determine the configuration information of the sensing signal based on the first indication information and/or the second indication information; where
the first indication information includes at least one of a sensing requirement, first configuration information of the sensing signal, capability information of the first network device, and recommended configuration information of the first network device; and
the second indication information includes at least one of a sensing requirement, second configuration information of the sensing signal, capability information of the second network device, and recommended configuration information of the second network device.

Optionally, the configuration information of the sensing signal includes at least one of the following:
first configuration information, where the first configuration information is configuration information of the sensing signal that is determined by the first network device;
second configuration information, where the second configuration information is configuration information of the sensing signal that is determined by the second network device; and
third configuration information, where the third configuration information is configuration information of the sensing signal that is determined by the terminal.

Optionally, the terminal determines the third configuration information by using at least one of the following:
a sensing requirement;
capability information of the first network device;
recommended configuration information of the first network device;
capability information of the second network device; and
recommended configuration information of the second network device.

Optionally, the apparatus further includes:
a seventh sending module, configured to send first sensing requirement response information to the first network device or the second network device in a case that it is determined, based on the first indication information and/or the second indication information, to participate in a sensing service, where the first sensing requirement response information is used to indicate that the terminal agrees to participate in the sensing service; or
send second sensing requirement response information to the first network device or the second network device in a case that it is determined, based on the first indication information and/or the second indication information, not to participate in a sensing service, where the second sensing requirement response information is used to indicate that the terminal refuses to participate in the sensing service.

Optionally, the configuration information of the sensing signal includes at least one of the following:
a waveform of the sensing signal;
a subcarrier spacing of the sensing signal;
a guard interval of the sensing signal; and
bandwidth of the sensing signal; and
burst duration of the sensing signal;
a time domain interval of the sensing signal;
transmit signal power of the sensing signal;
a signal format of the sensing signal;
a signal direction of the sensing signal;
a time resource of the sensing signal;
a frequency resource of the sensing signal; and
a quasi-colocation QCL relationship of the sensing signal.

Optionally, the apparatus further includes:
a fifth obtaining module, configured to obtain a first measurement amount sent by the first network device or a second network device;
   or
a third determining module, configured to determine the first measurement amount based on a sensing requirement.

Optionally, the apparatus further includes:
a sixth obtaining module, configured to obtain a measurement result sent by the first network device, where the measurement result is a measurement result that is corresponding to a first measurement amount and that is obtained by the first network device based on the sensing signal, and the first measurement amount is a measurement amount related to the sensing signal; and
a first processing module, configured to determine a sensing result based on the measurement result, or sending the measurement result to a second network device.

Optionally, the apparatus further includes:
an eighth sending module, configured to send the sensing result to the first network device or the second network device.

Optionally, the apparatus further includes:
a ninth sending module, configured to send third indication information to the first network device and/or a second network device, where the third indication information includes at least one of a sensing requirement, third configuration information of the sensing signal, capability information of the terminal, and recommended configuration information of the terminal.

Optionally, the apparatus further includes:
a seventh obtaining module, configured to obtain a target sensing result fed back by the first network device and/or the second network device based on the third indication information; where
the target sensing result includes a sensing result obtained based on a measurement result of at least one first terminal.

Optionally, the first measurement amount includes at least one of the following:
a channel matrix H;
received signal strength indication RSSI;
reference signal received power RSRP;
channel state information CSI;
power, delay, and/or angle information of each path on a multi-path channel;
Doppler spread;
Doppler frequency shift;
a phase difference between a first antenna and a second antenna;
a delay difference between the first antenna and the second antenna;
a feature difference between an inphase signal and a quadrature signal; and
angle-related information.

Optionally, the sensing result includes at least one of the following:
feature information of a target object;
related information of a target event; and
related information of a target environment.

Optionally, the second network device includes an access and mobility management function AMF entity or a sensing function entity.

Optionally, the sensing function entity meets at least one of the following:
management of overall coordination and scheduling of resources required for sensing;
calculation of a sensing result and estimation of sensing precision;
verification of a sensing result and estimation of sensing precision;
support of an immediate sensing request;
support of a delayed sensing request;
support of a periodic or event-triggered sensing request;
support of cancellation of periodic or triggered sensing behavior;
corresponding to at least one AMF entity; and
determining a sensing method based on at least one of a type of a sensing client, sensing QoS, a sensing capability of the terminal, and a sensing capability of a network device, where the sensing method includes at least one of the following: sending, by a first network node, a sensing signal, and receiving, by a second network node, the sensing signal; sending and receiving, by a network node, a sensing signal; sending, by a network node, a sensing signal, and receiving, by a terminal associated with the network node, the sensing signal; sending, by a terminal, a sensing signal, and receiving, by a network node associated with the terminal, the sensing signal; sending, by a first terminal, a sensing signal, and receiving, by a second terminal, the sensing signal; and sending and receiving, by a terminal, a sensing signal.

In this embodiment of this application, the terminal sends the sensing signal to the first network device, and the first network device receives the sensing signal, and may measure the sensing signal based on the first measurement amount related to the sensing signal, to obtain the measurement result, so that a wireless sensing procedure in which the terminal sends a sensing signal and a base station receives the sensing signal is implemented.

The apparatus for measuring a sensing signal in this embodiment of this application may be an apparatus or an electronic device with an operating system, or may be a component, an integrated circuit, or a chip in a terminal. The apparatus or the electronic device may be a mobile terminal, or a non-mobile terminal. For example, the mobile terminal may include but is not limited to the types of the foregoing listed terminals 11, and the non-mobile terminal may be a server, a network attached storage (Network Attached Storage, NAS), a personal computer (personal computer, PC), a television (television, TV), a teller machine, or a self-service machine. This is not specifically limited in this embodiment of this application.

The apparatus for measuring a sensing signal provided in this embodiment of this application can implement the processes of the method embodiment of FIG. 4, and a same technical effect is achieved. To avoid repetition, details are not described herein again.

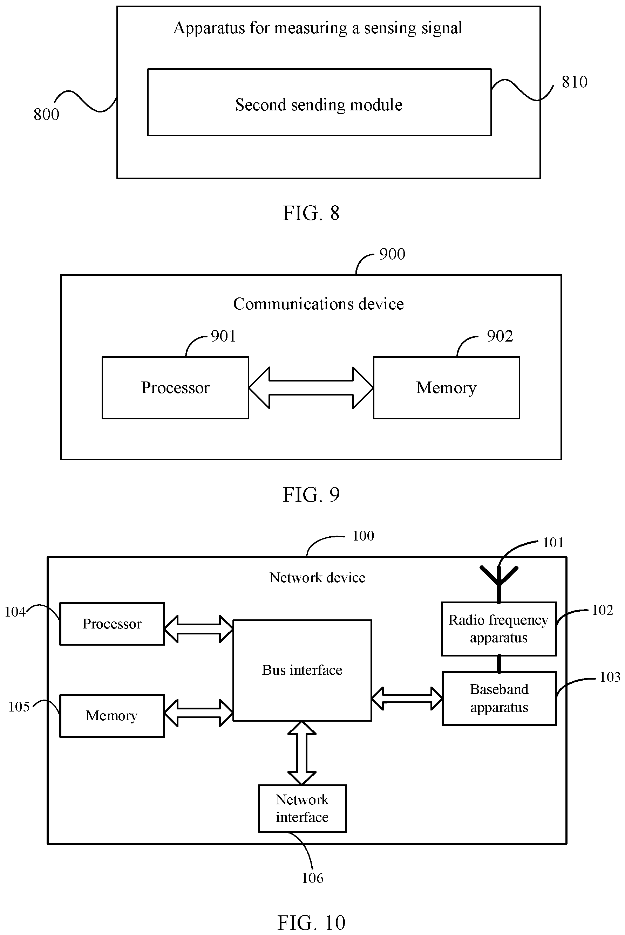

As shown in FIG. 8, an embodiment of this application further provides an apparatus 800 for measuring a sensing signal, applied to a second network device and including:
a second sending module 810, configured to send second indication information to a first network device and/or a terminal, where the second indication information is used to instruct the terminal to send a sensing signal, and/or the second indication information is used to instruct the first network device to receive a sensing signal and obtain, based on the sensing signal, a measurement result corresponding to a first measurement amount; where
the first measurement amount is a measurement amount related to the sensing signal.

Optionally, the second indication information includes at least one of a sensing requirement, second configuration information of the sensing signal, capability information of the second network device, and recommended configuration information of the second network device.

Optionally, the apparatus further includes:
a second receiving module, configured to receive target indication information, where the target indication information includes at least one of first indication information sent by the first network device, third indication information sent by the terminal, and fourth indication information sent by an application server; and
a fourth determining module, configured to determine configuration information of the sensing signal based on the target indication information; where
the first indication information includes at least one of a sensing requirement, first configuration information of the sensing signal, capability information of the first network device, and recommended configuration information of the first network device;
the third indication information includes at least one of a sensing requirement, third configuration information of the sensing signal, capability information of the terminal, and recommended configuration information of the terminal; and
the fourth indication information includes a sensing requirement.

Optionally, the configuration information of the sensing signal includes at least one of the following:
first configuration information, where the first configuration information is configuration information of the sensing signal that is determined by the first network device;
second configuration information, where the second configuration information is configuration information of the sensing signal that is determined by the second network device; and
third configuration information, where the third configuration information is configuration information of the sensing signal that is determined by the terminal.

Optionally, the second network device determines the second configuration information by using at least one of the following:
a sensing requirement;
capability information of the terminal;
recommended configuration information of the terminal;
recommended configuration information of the first network device; and
capability information of the first network device.

Optionally, the configuration information of the sensing signal includes at least one of the following:
a waveform of the sensing signal;
a subcarrier spacing of the sensing signal;
a guard interval of the sensing signal;
bandwidth of the sensing signal;
burst duration of the sensing signal;
a time domain interval of the sensing signal;
transmit signal power of the sensing signal;
a signal format of the sensing signal;
a signal direction of the sensing signal;
a time resource of the sensing signal;
a frequency resource of the sensing signal; and
a quasi-colocation QCL relationship of the sensing signal.

Optionally, the apparatus further includes:
a third receiving module, configured to receive first sensing requirement response information or a second sensing requirement response message that is sent by the terminal or the first network device; where
the first sensing requirement response information is used to indicate that the terminal agrees to participate in a sensing service, and the second sensing requirement response information is used to indicate that the terminal refuses to participate in a sensing service.

Optionally, the apparatus further includes:
a fifth determining module, configured to determine the first measurement amount based on a sensing requirement; and
a tenth sending module, configured to send the first measurement amount to the first network device or the terminal.

Optionally, the first measurement amount includes at least one of the following:
a channel matrix H;
received signal strength indication RSSI;
reference signal received power RSRP;
channel state information CSI;
power, delay, and/or angle information of each path on a multi-path channel;
Doppler spread;
Doppler frequency shift;
a phase difference between a first antenna and a second antenna;
a delay difference between the first antenna and the second antenna;
a feature difference between an inphase signal and a quadrature signal; and
angle-related information.

Optionally, the apparatus further includes:
an eighth obtaining module, configured to obtain a measurement result sent by the first network device or the terminal; and
a sixth determining module, configured to determine a sensing result based on the measurement result.

Optionally, the apparatus further includes:
an eleventh sending module, configured to send the sensing result to the first network device or the terminal.

Optionally, the apparatus further includes:
a ninth obtaining module, configured to obtain a sensing result sent by the first network device or the terminal, where the sensing result is obtained based on the measurement result.

Optionally, the sensing result includes at least one of the following:
feature information of a target object;
related information of a target event; and
related information of a target environment.

Optionally, the terminal is determined by using at least one of the following:
capability-related information reported by the terminal to the second network device;
information, fed back by the terminal to the second network device, about whether the terminal agrees or refuses to participate in a sensing service;
pre-agreed information about whether the terminal participates in a sensing service;
whether a terminal that participates in a sensing service feeds back sensing response information corresponding to the sensing requirement within specified time;
priori information of the terminal, where the priori information of the terminal includes at least one of a location of the terminal and an area in which the terminal is located; and
information about a base station accessed by the terminal.

Optionally, the first network device is determined by using at least one of the following:
information about a terminal connected to the first network device;
capability-related information reported by the first network device to the second network device; and
prior information of the first network device, where the prior information of the first network device includes at least one of a location of a base station and an area in which the base station is located.

Optionally, the second network device includes an access and mobility management function AMF entity or a sensing function entity.

Optionally, the sensing function entity meets at least one of the following:
management of overall coordination and scheduling of resources required for sensing;
calculation of a sensing result and estimation of sensing precision;
verification of a sensing result and estimation of sensing precision;
support of an immediate sensing request;
support of a delayed sensing request;
support of a periodic or event-triggered sensing request;
support of cancellation of periodic or triggered sensing behavior;
corresponding to at least one AMF entity; and
determining a sensing method based on at least one of a type of a sensing client, sensing QoS, a sensing capability of the terminal, and a sensing capability of a network device, where the sensing method includes at least one of the following: sending, by a first network node, a sensing signal, and receiving, by a second network node, the sensing signal; sending and receiving, by a network node, a sensing signal; sending, by a network node, a sensing signal, and receiving, by a terminal associated with the network node, the sensing signal; sending, by a terminal, a sensing signal, and receiving, by a network node associated with the terminal, the sensing signal; sending, by a first terminal, a sensing signal, and receiving, by a second terminal, the sensing signal; and sending and receiving, by a terminal, a sensing signal.

In this embodiment of this application, the terminal sends the sensing signal to the first network device, and the first network device receives the sensing signal, and may measure the sensing signal based on first measurement amount related to the sensing signal, to obtain the measurement result, so that a wireless sensing procedure in which the terminal sends a sensing signal and a base station receives the sensing signal is implemented.

The apparatus for measuring a sensing signal in this embodiment of this application may be an apparatus or an electronic device with an operating system, or may be a component, an integrated circuit, or a chip in a terminal. The apparatus or the electronic device may be a mobile terminal, or a non-mobile terminal. For example, the mobile terminal may include but is not limited to the types of the foregoing listed terminals 11, and the non-mobile terminal may be a server, a network attached storage (Network Attached Storage, NAS), a personal computer (personal computer, PC), a television (television, TV), a teller machine, or a self-service machine. This is not specifically limited in this embodiment of this application.

The apparatus for measuring a sensing signal provided in this embodiment of this application can implement the processes implemented in the method embodiment shown in FIG. 5, and a same technical effect is achieved. To avoid repetition, details are not described herein again.

Optionally, as shown in FIG. 9, an embodiment of this application further provides a communications device 900, including a processor 901, a memory 902, a program or an instruction that is stored in the memory 902 and that can run on the processor 901. For example, when the communications device 900 is a terminal, the program or the instruction is executed by the processor 901 to implement the processes in the embodiment of the method for measuring a sensing signal applied to the terminal, and a same technical effect can be achieved. When the communications device 900 is a network side device, the program or the instruction is executed by the processor 901 to implement the processes in the embodiment of the method for measuring a sensing signal applied to the first network device or the second network device, and a same technical effect can be achieved. To avoid repetition, details are not described herein again.

An embodiment of this application provides a network device, and the network device is a first network device and includes a processor and a communications interface. The communications interface is configured to obtain a sensing signal sent by a terminal, and the processor is configured to obtain, based on the sensing signal, a measurement result corresponding to a first measurement amount.

The first measurement amount is a measurement amount related to the sensing signal.

This network device embodiment is corresponding to the foregoing method embodiment applied to the first network device. Each implementation process and implementation manner of the foregoing method embodiment may be applicable to the network device embodiment, and a same technical effect can be achieved.

Specifically, an embodiment of this application further provides a network device, and the network device is a first network device. As shown in FIG. 10, a network device 100 includes an antenna 101, a radio frequency apparatus 102, and a baseband apparatus 103. The antenna 101 is connected to the radio frequency apparatus 102. In an uplink direction, the radio frequency apparatus 102 receives information by using the antenna 101, and sends the received information to the baseband apparatus 103 for processing. In a downlink direction, the baseband apparatus 103 processes to-be-sent information, and sends the information to the radio frequency apparatus 102. The radio frequency apparatus 102 processes the received information and then sends the information by using the antenna 101.

The foregoing band processing apparatus may be located in the baseband apparatus 103. In the foregoing embodiment, a method performed by the network device may be implemented in the baseband apparatus 103. The baseband apparatus 103 includes a processor 104 and a memory 105.

The baseband apparatus 103 may include, for example, at least one baseband board, where a plurality of chips are disposed on the baseband board. As shown in FIG. 10, one chip is, for example, the processor 104, which is connected to the memory 105, so as to invoke a program in the memory 105 to perform operations of the network device shown in the foregoing method embodiment.

The baseband apparatus 103 may further include a network interface 106, configured to exchange information with the radio frequency apparatus 102, where the interface is, for example, a common public radio interface (common public radio interface, CPRI for short).

Specifically, the network device in this embodiment of the present invention further includes an instruction or a program that is stored in the memory 105 and that can run on the processor 104. The processor 104 invokes the instruction or the program in the memory 105 to perform the method performed by the modules shown in FIG. 6, and a same technical effect is achieved. To avoid repetition, details are not described herein again.

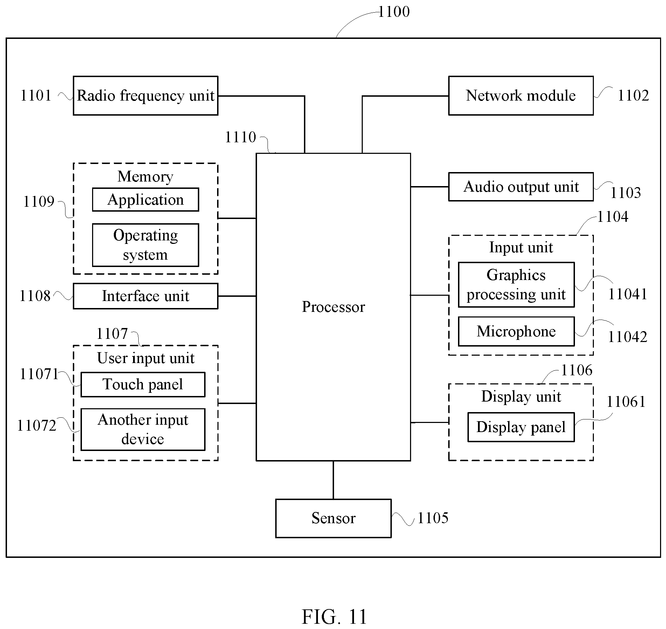

An embodiment of this application further provides a terminal, including a processor and a communications interface. The processor is configured to send a sensing signal to a first network device through the communications interface. This terminal embodiment corresponds to the foregoing method embodiment on the terminal side. Each implementation process and implementation of the foregoing method embodiment may be applicable to this terminal embodiment, and a same technical effect can be achieved. Specifically, FIG. 11 is a schematic diagram of a hardware structure of a terminal according to an embodiment of this application.

A terminal 1100 includes but is not limited to at least some components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art can understand that the terminal 1100 may further include a power supply (such as a battery) that supplies power to each component. The power supply may be logically connected to the processor 1110 by using a power supply management system, to implement functions such as charging and discharging management, and power consumption management by using the power supply management system. The terminal structure shown in FIG. 11 constitutes no limitation on the terminal, and the terminal may include more or fewer components than those shown in the figure, or combine some components, or have different component arrangements. Details are not described herein.

It should be understood that, in this embodiment of this application, the input unit 1104 may include a graphics processing unit (Graphics Processing Unit, GPU) 11041 and a microphone 11042, and the graphics processing unit 11041 processes image data of a still picture or a video obtained by an image capture apparatus (such as a camera) in a video capture mode or an image capture mode. The display unit 1106 may include a display panel 11061. Optionally, the display panel 11061 may be configured in a form such as a liquid crystal display or an organic light-emitting diode. The user input unit 1107 includes a touch panel 11071 and another input device 11072. The touch panel 11071 is also referred to as a touchscreen. The touch panel 11071 may include two parts: a touch detection apparatus and a touch controller. The another input device 11072 may include but is not limited to a physical keyboard, a functional button (such as a volume control button or a power on/off button), a trackball, a mouse, and a joystick. Details are not described herein.

In this embodiment of this application, the radio frequency unit 1101 receives downlink data from a network side device and then sends the downlink data to the processor 1110 for processing; and sends uplink data to the network side device. Usually, the radio frequency unit 1101 includes but is not limited to an antenna, at least one amplifier, a transceiver, a coupler, a low noise amplifier, a duplexer, and the like.

The memory 1109 may be configured to store a software program or an instruction and various data. The memory 1109 may mainly include a program or instruction storage area and a data storage area. The program or instruction storage area may store an operating system, and an application or an instruction required by at least one function (for example, a sound playing function or an image playing function). In addition, the memory 1109 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 1110 may include one or more processing units. Optionally, an application processor and a modem processor may be integrated into the processor 1110. The application processor mainly processes an operating system, a user interface, an application, an instruction, or the like. The modem processor mainly processes wireless communication, for example, a baseband processor. It can be understood that, alternatively, the modem processor may not be integrated into the processor 1110.

The radio frequency unit 1101 is configured to send a sensing signal to a first network device.

Optionally, the processor 1110 is configured to determine configuration information of the sensing signal.

The radio frequency unit 1101 is configured to send the sensing signal to the first network device based on the configuration information.

Optionally, when the processor 1110 determines the configuration information of the sensing signal, the radio frequency unit 1101 is configured to:
receive first indication information sent by the first network device and/or second indication information sent by a second network device; and
the processor 1110 is configured to determine the configuration information of the sensing signal based on the first indication information and/or the second indication information; where
the first indication information includes at least one of a sensing requirement, first configuration information of the sensing signal, capability information of the first network device, and recommended configuration information of the first network device; and

The second indication information includes at least one of a sensing requirement, second configuration information of the sensing signal, capability information of the second network device, and recommended configuration information of the second network device.

Optionally, the configuration information includes at least one of the following:
the first configuration information, where the first configuration information is configuration information of the sensing signal that is determined by the first network device;
the second configuration information, where the second configuration information is configuration information of the sensing signal that is determined by the second network device; and
the third configuration information, where the third configuration information is configuration information of the sensing signal that is determined by the terminal.

Optionally, the terminal determines the third configuration information by using at least one of the following:
a sensing requirement;
capability information of the first network device;
recommended configuration information of the first network device;
capability information of the second network device; and
recommended configuration information of the second network device.

Optionally, the radio frequency unit 1101 is further configured to: send first sensing requirement response information to the first network device or the second network device in a case that it is determined, based on the first indication information and/or the second indication information, to participate in a sensing service, where the first sensing requirement response information is used to indicate that the terminal agrees to participate in the sensing service; or
send second sensing requirement response information to the first network device or the second network device in a case that it is determined, based on the first indication information and/or the second indication information, not to participate in a sensing service, where the second sensing requirement response information is used to indicate that the terminal refuses to participate in the sensing service.

Optionally, the configuration information of the sensing signal includes at least one of the following:
a waveform of the sensing signal;
a subcarrier spacing of the sensing signal;
a guard interval of the sensing signal; and
bandwidth of the sensing signal; and
burst duration of the sensing signal;
a time domain interval of the sensing signal;
transmit signal power of the sensing signal;
a signal format of the sensing signal;
a signal direction of the sensing signal;
a time resource of the sensing signal;
a frequency resource of the sensing signal; and
a quasi-colocation QCL relationship of the sensing signal.

Optionally, the processor 1110 is further configured to:
obtain a first measurement amount sent by the first network device or a second network device;
   or
determine the first measurement amount based on a sensing requirement.

Optionally, the processor 1110 is further configured to:
obtain a measurement result sent by the first network device, where the measurement result is a measurement result that is corresponding to a first measurement amount and that is obtained by the first network device based on the sensing signal, and the first measurement amount is a measurement amount related to the sensing signal; and
determine a sensing result based on the measurement result, or send the measurement result to a second network device.

Optionally, after the sensing result is determined based on the measurement result, the radio frequency unit 1101 is further configured to send the sensing result to the first network device or the second network device.

Optionally, before sending the sensing signal to the first network device, the radio frequency unit 1101 is further configured to send third indication information to the first network device and/or a second network device, where the third indication information includes at least one of a sensing requirement, third configuration information of the sensing signal, capability information of the terminal, and recommended configuration information of the terminal.

Optionally, the processor 1110 is further configured to obtain a target sensing result fed back by the first network device and/or the second network device based on the third indication information; where
the target sensing result includes a sensing result obtained based on a measurement result of at least one terminal.

Optionally, the first measurement amount includes at least one of the following:
a channel matrix H;
received signal strength indication RSSI;
reference signal received power RSRP;
channel state information CSI;
power, delay, and/or angle information of each path on a multi-path channel;
Doppler spread;
Doppler frequency shift;
a phase difference between a first antenna and a second antenna;
a delay difference between the first antenna and the second antenna;
a feature difference between an inphase signal and a quadrature signal; and
angle-related information.

Optionally, the sensing result includes at least one of the following:
feature information of a target object;
related information of a target event; and
related information of a target environment.

Optionally, the second network device includes an access and mobility management function AMF entity or a sensing function entity.

Optionally, the sensing function entity meets at least one of the following:
management of overall coordination and scheduling of resources required for sensing;
calculation of a sensing result and estimation of sensing precision;
verification of a sensing result and estimation of sensing precision;
support of an immediate sensing request;
support of a delayed sensing request;
support of a periodic or event-triggered sensing request;
support of cancellation of periodic or triggered sensing behavior;
corresponding to at least one AMF entity; and
determining a sensing method based on at least one of a type of a sensing client, sensing QoS, a sensing capability of the terminal, and a sensing capability of a network device, where the sensing method includes at least one of the following: sending, by a first network node, a sensing signal, and receiving, by a second network node, the sensing signal; sending and receiving, by a network node, a sensing signal; sending, by a network node, a sensing signal, and receiving, by a terminal associated with the network node, the sensing signal; sending, by a terminal, a sensing signal, and receiving, by a network node associated with the terminal, the sensing signal; sending, by a first terminal, a sensing signal, and receiving, by a second terminal, the sensing signal; and sending and receiving, by a terminal, a sensing signal.

In this embodiment of this application, the terminal sends the sensing signal to the first network device, and the first network device obtains, based on the sensing signal, the measurement result corresponding to the first measurement amount, so that a wireless sensing procedure in which the terminal sends a sensing signal and a base station receives the sensing signal is implemented.

An embodiment of this application further provides a network device, and the network device is a second network device and includes a processor and a communications interface. The processor is configured to send second indication information to a first network device and/or a terminal through the communications interface, where the second indication information is used to instruct the terminal to send a sensing signal, and/or the second indication information is used to instruct the first network device to receive a sensing signal and obtain, based on the sensing signal, a measurement result corresponding to a first measurement amount, where the first measurement amount is a measurement amount related to the sensing signal. This network device embodiment is corresponding to the foregoing method embodiment of the second network device. Each implementation process and implementation manner of the foregoing method embodiment may be applicable to the network device embodiment, and a same technical effect can be achieved.

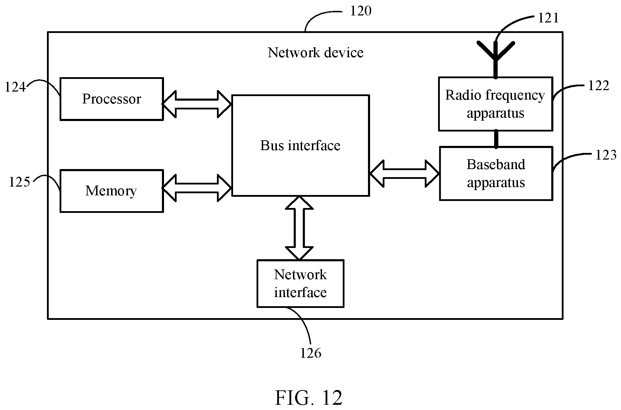

Specifically, an embodiment of this application further provides a network side device. As shown in FIG. 12, a network device 120 includes an antenna 121, a radio frequency apparatus 122, and a baseband apparatus 123. The antenna 121 is connected to the radio frequency apparatus 122. In an uplink direction, the radio frequency apparatus 122 receives information by using the antenna 121, and sends the received information to the baseband apparatus 123 for processing. In a downlink direction, the baseband apparatus 123 processes to-be-sent information, and sends the information to the radio frequency apparatus 122. The radio frequency apparatus 122 processes the received information and then sends the information by using the antenna 121.

The frequency band processing apparatus may be located in the baseband apparatus 123. The method performed by the second network device in the foregoing embodiment may be implemented in the baseband apparatus 123. The baseband apparatus 123 includes a processor 124 and a memory 125.

The baseband apparatus 123 may include, for example, at least one baseband board, where a plurality of chips are disposed on the baseband board. As shown in FIG. 12, one chip is, for example, the processor 124, which is connected to the memory 125, so as to invoke a program in the memory 125 to perform operations of the network device shown in the foregoing method embodiment.

The baseband apparatus 123 may further include a network interface 126, configured to exchange information with the radio frequency apparatus 122, where the interface is, for example, a common public radio interface (common public radio interface, CPRI for short).

Specifically, the network device in this embodiment of the present invention further includes an instruction or a program that is stored in the memory 125 and that can run on the processor 124. The processor 124 invokes the instruction or the program in the memory 125 to perform the method performed by the modules shown in FIG. 8, and a same technical effect is achieved. To avoid repetition, details are not described herein again.

An embodiment of this application further provides a readable storage medium, where the readable storage medium stores a program or an instruction, and when the program or the instruction is executed by a processor, the processes in the embodiment of the method for measuring a sensing signal are implemented, and a same technical effect can be achieved. To avoid repetition, details are not described herein again.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application also provides a chip, where the chip includes a processor and a communications interface, and the communications interface is coupled to the processor. The processor is configured to run a program or an instruction to implement the processes in the embodiment of the method for measuring a sensing signal, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be a mobile phone, a computer, a server, an air conditioner, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A method for measuring a sensing signal, comprising:
obtaining, by a first network device, a sensing signal sent by a terminal; and
obtaining, by the first network device based on the sensing signal, a measurement result corresponding to a first measurement amount; wherein
the first measurement amount is a measurement amount related to the sensing signal.

2. The method according to claim 1, wherein before the obtaining a sensing signal sent by a terminal, the method further comprises:
sending, by the first network device, first indication information to a second network device and/or the terminal; wherein
the first indication information comprises at least one of a sensing requirement, first configuration information of the sensing signal, capability information of the first network device, and recommended configuration information of the first network device.

3. The method according to claim 2, wherein after the obtaining, based on the sensing signal, a measurement result corresponding to a first measurement amount, the method further comprises:
obtaining a sensing result fed back by the second network device or the terminal based on the first indication information; wherein
the sensing result is a sensing result obtained by the second network device or the terminal based on the measurement result of the first network device.

4. The method according to claim 1, wherein the obtaining a sensing signal sent by a terminal comprises:
determining configuration information of the sensing signal; and
receiving the sensing signal based on the configuration information.

5. The method according to claim 4, wherein the determining configuration information of the sensing signal comprises:
receiving second indication information sent by a second network device and/or third indication information sent by the terminal; and
determining configuration information of the sensing signal based on the second indication information and/or the third indication information; wherein
the second indication information comprises at least one of a sensing requirement, second configuration information of the sensing signal, capability information of the second network device, and recommended configuration information of the second network device; and
the third indication information comprises at least one of a sensing requirement, third configuration information of the sensing signal, capability information of the terminal, and recommended configuration information of the terminal.

6. The method according to claim 5, wherein the configuration information of the sensing signal comprises at least one of the following:
the first configuration information, wherein the first configuration information is configuration information of the sensing signal that is determined by the first network device;
the second configuration information, wherein the second configuration information is configuration information of the sensing signal that is determined by the second network device; and
the third configuration information, wherein the third configuration information is configuration information of the sensing signal that is determined by the terminal.

7. The method according to claim 6, wherein the first network device determines the first configuration information by using at least one of the following:
the sensing requirement;
the capability information of the second network device;
the recommended configuration information of the second network device;
the capability information of the terminal; and
the recommended configuration information of the terminal.

8. The method according to claim 2, wherein after the sending first indication information to a second network device and/or the terminal, the method further comprises:
receiving a first sensing requirement response message or a second sensing requirement response message that is sent by the terminal; and
sending the first sensing requirement response message or the second sensing requirement response message to the second network device; wherein
the first sensing requirement response information is used to indicate that the terminal agrees to participate in a sensing service, and the second sensing requirement response information is used to indicate that the terminal refuses to participate in a sensing service.

9. The method according to claim 4, wherein the configuration information of the sensing signal comprises at least one of the following:
a waveform of the sensing signal;
a subcarrier spacing of the sensing signal;
a guard interval of the sensing signal;
bandwidth of the sensing signal;
burst duration of the sensing signal;
a time domain interval of the sensing signal;
transmit signal power of the sensing signal;
a signal format of the sensing signal;
a signal direction of the sensing signal;
a time resource of the sensing signal;
a frequency resource of the sensing signal; and
a quasi-colocation QCL relationship of the sensing signal.

10. The method according to claim 1, wherein the method further comprises:
obtaining, by the first network device, a first measurement amount sent by a second network device or the terminal;
or
determining the first measurement amount based on a sensing requirement.

11. The method according to claim 1, wherein after the obtaining, based on the sensing signal, a measurement result corresponding to a first measurement amount, the method further comprises:
sending the measurement result to a second network device or the terminal.

12. The method according to claim 1, wherein after the obtaining, based on the sensing signal, a measurement result corresponding to a first measurement amount, the method further comprises:
determining a sensing result based on the measurement result; and
sending the sensing result to a second network device or the terminal.

13. The method according to claim 1, wherein the first measurement amount comprises at least one of the following:
a channel matrix H;
received signal strength indication RSSI;
reference signal received power RSRP;
channel state information CSI;
power, delay, and/or angle information of each path on a multi-path channel;
Doppler spread;
Doppler frequency shift;
a phase difference between a first antenna and a second antenna;
a delay difference between the first antenna and the second antenna;
a feature difference between an inphase signal and a quadrature signal; and
angle-related information.

14. The method according to claim 3 or 12, wherein the sensing result comprises at least one of the following:
feature information of a target object;
related information of a target event; and
related information of a target environment.

15. The method according to claim 2, 3, 5, 6, 7, 8, 10, 11, or 12, wherein the second network device comprises an access and mobility management function AMF entity or a sensing function entity.

16. The method according to claim 15, wherein the sensing function entity meets at least one of the following:
management of overall coordination and scheduling of resources required for sensing;
calculation of a sensing result and estimation of sensing precision;
verification of a sensing result and estimation of sensing precision;
support of an immediate sensing request;
support of a delayed sensing request;
support of a periodic or event-triggered sensing request;
support of cancellation of periodic or triggered sensing behavior;
corresponding to at least one AMF entity; and
determining a sensing method based on at least one of a type of a sensing client, sensing QoS, a sensing capability of the terminal, and a sensing capability of a network device, wherein the sensing method comprises at least one of the following: sending, by a first network node, a sensing signal, and receiving, by a second network node, the sensing signal; sending and receiving, by a network node, a sensing signal; sending, by a network node, a sensing signal, and receiving, by a terminal associated with the network node, the sensing signal; sending, by a terminal, a sensing signal, and receiving, by a network node associated with the terminal, the sensing signal; sending, by a first terminal, a sensing signal, and receiving, by a second terminal, the sensing signal; and sending and receiving, by a terminal, a sensing signal.

17. A method for measuring a sensing signal, comprising:
sending, by a terminal, a sensing signal to a first network device.

18. The method according to claim 17, wherein the sending a sensing signal to a first network device comprises:
determining configuration information of the sensing signal; and
sending the sensing signal to the first network device based on the configuration information.

19. The method according to claim 18, wherein the determining configuration information of the sensing signal comprises:
receiving first indication information sent by the first network device and/or second indication information sent by a second network device; and
determining the configuration information of the sensing signal based on the first indication information and/or the second indication information; wherein
the first indication information comprises at least one of a sensing requirement, first configuration information of the sensing signal, capability information of the first network device, and recommended configuration information of the first network device; and
the second indication information comprises at least one of a sensing requirement, second configuration information of the sensing signal, capability information of the second network device, and recommended configuration information of the second network device.

20. The method according to claim 19, wherein the configuration information of the sensing signal comprises at least one of the following:
first configuration information, wherein the first configuration information is configuration information of the sensing signal that is determined by the first network device;
second configuration information, wherein the second configuration information is configuration information of the sensing signal that is determined by the second network device; and
third configuration information, wherein the third configuration information is configuration information of the sensing signal that is determined by the terminal.

21. The method according to claim 20, wherein the terminal determines the third configuration information by using at least one of the following:
a sensing requirement;
capability information of the first network device;
recommended configuration information of the first network device;
capability information of the second network device; and
recommended configuration information of the second network device.

22. The method according to claim 19, wherein after the receiving first indication information sent by the first network device and/or second indication information sent by a second network device, the method further comprises:
sending first sensing requirement response information to the first network device or the second network device in a case that it is determined, based on the first indication information and/or the second indication information, to participate in a sensing service, wherein the first sensing requirement response information is used to indicate that the terminal agrees to participate in the sensing service; or
sending second sensing requirement response information to the first network device or the second network device in a case that it is determined, based on the first indication information and/or the second indication information, not to participate in a sensing service, wherein the second sensing requirement response information is used to indicate that the terminal refuses to participate in the sensing service.

23. The method according to claim 18, wherein the configuration information of the sensing signal comprises at least one of the following:
a waveform of the sensing signal;
a subcarrier spacing of the sensing signal;
a guard interval of the sensing signal; and
bandwidth of the sensing signal; and
burst duration of the sensing signal;
a time domain interval of the sensing signal;
transmit signal power of the sensing signal;
a signal format of the sensing signal;
a signal direction of the sensing signal;
a time resource of the sensing signal;
a frequency resource of the sensing signal; and
a quasi-colocation QCL relationship of the sensing signal.

24. The method according to claim 17, wherein the method further comprises:
obtaining, by the terminal, a first measurement amount sent by the first network device or a second network device;
or
determining the first measurement amount based on a sensing requirement.

25. The method according to claim 17, wherein after the sending a sensing signal to a first network device, the method further comprises:
obtaining a measurement result sent by the first network device, wherein the measurement result is a measurement result that is corresponding to a first measurement amount and that is obtained by the first network device based on the sensing signal, and the first measurement amount is a measurement amount related to the sensing signal; and
determining a sensing result based on the measurement result, or sending the measurement result to a second network device.

26. The method according to claim 25, wherein after the determining a sensing result based on the measurement result, the method further comprises:
sending the sensing result to the first network device or the second network device.

27. The method according to claim 17, wherein before the sending a sensing signal to a first network device, the method further comprises:
sending third indication information to the first network device and/or a second network device, wherein the third indication information comprises at least one of a sensing requirement, third configuration information of the sensing signal, capability information of the terminal, and recommended configuration information of the terminal.

28. The method according to claim 27, wherein the method further comprises:
obtaining a target sensing result fed back by the first network device and/or the second network device based on the third indication information; wherein
the target sensing result comprises a sensing result obtained based on a measurement result of at least one terminal.

29. The method according to claim 24, wherein the first measurement amount comprises at least one of the following:
a channel matrix H;
received signal strength indication RSSI;
reference signal received power RSRP;
channel state information CSI;
power, delay, and/or angle information of each path on a multi-path channel;
Doppler spread;
Doppler frequency shift;
a phase difference between a first antenna and a second antenna;
a delay difference between the first antenna and the second antenna;
a feature difference between an inphase signal and a quadrature signal; and
angle-related information.

30. The method according to claim 25, 26, or 28, wherein the sensing result comprises at least one of the following:
feature information of a target object;
related information of a target event; and
related information of a target environment.

31. The method according to claim 19, 20, 21, 22, 24, 25, 26, 27, or 28, wherein the second network device comprises an access and mobility management function AMF entity or a sensing function entity.

32. The method according to claim 31, wherein the sensing function entity meets at least one of the following:
management of overall coordination and scheduling of resources required for sensing;
calculation of a sensing result and estimation of sensing precision;
verification of a sensing result and estimation of sensing precision;
support of an immediate sensing request;
support of a delayed sensing request;
support of a periodic or event-triggered sensing request;
support of cancellation of periodic or triggered sensing behavior;
corresponding to at least one AMF entity; and
determining a sensing method based on at least one of a type of a sensing client, sensing QoS, a sensing capability of the terminal, and a sensing capability of a network device, wherein the sensing method comprises at least one of the following: sending, by a first network node, a sensing signal, and receiving, by a second network node, the sensing signal; sending and receiving, by a network node, a sensing signal; sending, by a network node, a sensing signal, and receiving, by a terminal associated with the network node, the sensing signal; sending, by a terminal, a sensing signal, and receiving, by a network node associated with the terminal, the sensing signal; sending, by a first terminal, a sensing signal, and receiving, by a second terminal, the sensing signal; and sending and receiving, by a terminal, a sensing signal.

33. A method for measuring a sensing signal, comprising:
sending, by a second network device, second indication information to a first network device and/or a terminal, wherein the second indication information is used to instruct the terminal to send a sensing signal, and/or the second indication information is used to instruct the first network device to receive a sensing signal and obtain, based on the sensing signal, a measurement result corresponding to a first measurement amount; wherein
the first measurement amount is a measurement amount related to the sensing signal.

34. The method according to claim 33, wherein the second indication information comprises at least one of a sensing requirement, second configuration information of the sensing signal, capability information of the second network device, and recommended configuration information of the second network device.

35. The method according to claim 33, wherein before the sending second indication information to a first network device and/or a terminal, the method further comprises:
receiving target indication information, wherein the target indication information comprises at least one of first indication information sent by the first network device, third indication information sent by the terminal, and fourth indication information sent by an application server; and
determining configuration information of the sensing signal based on the target indication information; wherein
the first indication information comprises at least one of a sensing requirement, first configuration information of the sensing signal, capability information of the first network device, and recommended configuration information of the first network device;
the third indication information comprises at least one of a sensing requirement, third configuration information of the sensing signal, capability information of the terminal, and recommended configuration information of the terminal; and
the fourth indication information comprises a sensing requirement.

36. The method according to claim 35, wherein the configuration information of the sensing signal comprises at least one of the following:
first configuration information, wherein the first configuration information is configuration information of the sensing signal that is determined by the first network device;
second configuration information, wherein the second configuration information is configuration information of the sensing signal that is determined by the second network device; and
third configuration information, wherein the third configuration information is configuration information of the sensing signal that is determined by the terminal.

37. The method according to claim 36, wherein the second network device determines the second configuration information by using at least one of the following:
a sensing requirement;
capability information of the terminal;
recommended configuration information of the terminal;
recommended configuration information of the first network device; and
capability information of the first network device.

38. The method according to claim 35, wherein the configuration information of the sensing signal comprises at least one of the following:
a waveform of the sensing signal;
a subcarrier spacing of the sensing signal;
a guard interval of the sensing signal;
bandwidth of the sensing signal;
burst duration of the sensing signal;
a time domain interval of the sensing signal;
transmit signal power of the sensing signal;
a signal format of the sensing signal;
a signal direction of the sensing signal;
a time resource of the sensing signal;
a frequency resource of the sensing signal; and
a quasi-colocation QCL relationship of the sensing signal.

39. The method according to claim 33, wherein after the sending second indication information to a first network device and/or a terminal, the method further comprises:
receiving first sensing requirement response information or a second sensing requirement response message that is sent by the terminal or the first network device; wherein
the first sensing requirement response information is used to indicate that the terminal agrees to participate in a sensing service, and the second sensing requirement response information is used to indicate that the terminal refuses to participate in a sensing service.

40. The method according to claim 33, wherein the method further comprises:
determining the first measurement amount based on a sensing requirement; and
sending the first measurement amount to the first network device or the terminal.

41. The method according to claim 33, wherein the first measurement amount comprises at least one of the following:
a channel matrix H;
received signal strength indication RSSI;
reference signal received power RSRP;
channel state information CSI;
power, delay, and/or angle information of each path on a multi-path channel;
Doppler spread;
Doppler frequency shift;
a phase difference between a first antenna and a second antenna;
a delay difference between the first antenna and the second antenna;
a feature difference between an inphase signal and a quadrature signal; and
angle-related information.

42. The method according to claim 33, wherein the method further comprises:
obtaining a measurement result sent by the first network device or the terminal; and
determining a sensing result based on the measurement result.

43. The method according to claim 42, wherein the method further comprises:
sending the sensing result to the first network device or the terminal.

44. The method according to claim 33, wherein the method further comprises:
obtaining a sensing result sent by the first network device or the terminal, wherein the sensing result is obtained based on the measurement result.

45. The method according to claim 42 or 44, wherein the sensing result comprises at least one of the following:
feature information of a target object;
related information of a target event; and
related information of a target environment.

46. The method according to claim 33, wherein the terminal is determined by using at least one of the following:
capability-related information reported by the terminal to the second network device;
information, fed back by the terminal to the second network device, about whether the terminal agrees or refuses to participate in a sensing service;
pre-agreed information about whether the terminal participates in a sensing service;
whether a terminal that participates in a sensing service feeds back sensing response information corresponding to the sensing requirement within specified time;
priori information of the terminal, wherein the priori information of the terminal comprises at least one of a location of the terminal and an area in which the terminal is located; and
information about a base station accessed by the terminal.

47. The method according to claim 33, wherein the first network device is determined by using at least one of the following:
information about a terminal connected to the first network device;
capability-related information reported by the first network device to the second network device; and
prior information of the first network device, wherein the prior information of the first network device comprises at least one of a location of a base station and an area in which the base station is located.

48. The method according to claim 33, 34, 36, 37, 46, or 47, wherein the second network device comprises an access and mobility management function AMF entity or a sensing function entity.

49. The method according to claim 48, wherein the sensing function entity meets at least one of the following:
management of overall coordination and scheduling of resources required for sensing;
calculation of a sensing result and estimation of sensing precision;
verification of a sensing result and estimation of sensing precision;
support of an immediate sensing request;
support of a delayed sensing request;
support of a periodic or event-triggered sensing request;
support of cancellation of periodic or triggered sensing behavior;
corresponding to at least one AMF entity; and
determining a sensing method based on at least one of a type of a sensing client, sensing QoS, a sensing capability of the terminal, and a sensing capability of a network device, wherein the sensing method comprises at least one of the following: sending, by a first network node, a sensing signal, and receiving, by a second network node, the sensing signal; sending and receiving, by a network node, a sensing signal; sending, by a network node, a sensing signal, and receiving, by a terminal associated with the network node, the sensing signal; sending, by a terminal, a sensing signal, and receiving, by a network node associated with the terminal, the sensing signal; sending, by a first terminal, a sensing signal, and receiving, by a second terminal, the sensing signal; and sending and receiving, by a terminal, a sensing signal.

50. An apparatus for measuring a sensing signal, comprising:
a first obtaining module, configured to obtain a sensing signal sent by a terminal; and
a second obtaining module, configured to obtain, based on the sensing signal, a measurement result corresponding to a first measurement amount; wherein
the first measurement amount is a measurement amount related to the sensing signal.

51. An apparatus for measuring a sensing signal, comprising:
a first sending module, configured to send a sensing signal to a first network device.

52. An apparatus for measuring a sensing signal, comprising:
a second sending module, configured to send second indication information to a first network device and/or a terminal, wherein the second indication information is used to instruct the terminal to send a sensing signal, and/or the second indication information is used to instruct the first network device to receive a sensing signal and obtain, based on the sensing signal, a measurement result corresponding to a first measurement amount; wherein
the first measurement amount is a measurement amount related to the sensing signal.

53. A network device, wherein the network device is a first network device and comprises a processor, a memory, and a program or an instruction that is stored in the memory and that can run on the processor, and when the program or the instruction is executed by the processor, steps of the method for measuring a sensing signal according to any one of claims 1 to 16 are implemented.

54. A terminal, comprising a processor, a memory, and a program or an instruction that is stored in the memory and that can run on the processor, wherein when the program or the instruction is executed by the processor, steps of the method for measuring a sensing signal according to any one of claims 17 to 32 are implemented.

55. A network device, wherein the network device is a second network device and comprises a processor, a memory, and a program or an instruction that is stored in the memory and that can run on the processor, and when the program or the instruction is executed by the processor, steps of the method for measuring a sensing signal according to any one of claims 33 to 49 are implemented.

56. A readable storage medium, wherein the readable storage medium stores a program or an instruction, and when the program or the instruction is executed by a processor, steps of the method for measuring a sensing signal according to any one of claims 1 to 16 are implemented, or steps of the method for measuring a sensing signal according to any one of claims 17 to 32 are implemented, or steps of the method for measuring a sensing signal according to any one of claims 33 to 49 are implemented.

57. A chip, comprising a processor and a communications interface, wherein the communications interface is coupled to the processor, and the processor is configured to run a program or an instruction to implement steps of the method for measuring a sensing signal according to any one of claims 1 to 16, or steps of the method for measuring a sensing signal according to any one of claims 17 to 32, or steps of the method for measuring a sensing signal according to any one of claims 33 to 49.

58. A computer program product, wherein the program product is stored in a nonvolatile storage medium, and the program product is executed by at least one processor to implement steps of the method for measuring a sensing signal according to any one of claims 1 to 16, or steps of the method for measuring a sensing signal according to any one of claims 17 to 32, or steps of the method for measuring a sensing signal according to any one of claims 33 to 49.

59. A communications device, configured to perform steps of the method for measuring a sensing signal according to any one of claims 1 to 16, or steps of the method for measuring a sensing signal according to any one of claims 17 to 32, or steps of the method for measuring a sensing signal according to any one of claims 33 to 49.
